# EUROPEAN PATENT SPECIFICATION

(11) **EP 4 673 506 B1**
(45) Date of publication and mention of the grant of the patent: **18.11.2026**
(21) Application number: 24707796.9
(22) Date of filing: 01.03.2024
(51) Int. Cl.: C09C 1/00, C09C 3/12

(54) **BLUISH RED EFFECT PIGMENT**
BLÄULICHES ROTEFFEKTPIGMENT
PIGMENT À EFFET ROUGE BLEUÂTRE

(30) Priority: 02.03.2023 EP 23159712; 12.06.2023 GB 202308748; 09.10.2023 GB 202315452
(43) Date of publication of application: 07.01.2026
(73) Proprietor: Sun Chemical B.V., 1382 LV Weesp (NL)
(72) Inventor: SCHMID, Raimund, 67059 Ludwigshafen (DE)
(74) Representative: Carpmaels & Ransford LLP
(86) International application number: PCT/EP2024/055335
(87) International publication number: WO 2024/180212

(56) References cited:
- WO-A1-2018/186838
- WO-A2-2012/112541
- US-A1- 2003 209 169

## Description

Luster or effect pigments are used in many areas, for example in automotive coatings, decorative coatings, plastics, paints, printing inks, and cosmetics. The optical effect is based on the directed reflection of light at predominantly flake-like, parallel-oriented, metallic or strongly refractive pigment particles. Depending on the composition of the pigment platelets, there are interference, reflection and absorption phenomena which create angular-dependent color and lightness effects.

Metallic effect pigments are made of platelet-shaped substrates known to the skilled person, examples being aluminum platelets/flakes or metal oxide-coated aluminum platelets/flakes. Platelet-shaped aluminum pigments having a coating of iron oxide are well known and referred to, e.g., in EP-A-0033457 or by W. Ostertag et al., Farbe und Lack 12 (1987) 973-976. They belong to the class of effect pigments which, by virtue of their particular color properties, have found wide use in the coloration of coatings, paints, printing inks, plastics, ceramic compositions and glazes, and cosmetic preparations.

Iron oxide coated aluminum pigments derive their particular optical profile from a combination of specular reflection at the surface of the aluminum platelet, selective light absorption in the iron oxide layer and light interference at the film-like surfaces of the iron oxide layer. Light interference leads to a color which is mainly determined by the thickness of the iron oxide coating layer. Dry pigment powders therefore exhibit the following hues in air with increasing iron oxide layer thickness which are classified as due to 1st order or 2nd order interference:
1st order interference colors: pale yellow, green-gold, gold, reddish-gold, red, violet, grayish-violet;
2nd order interference colors: yellow, gold, reddish-gold, red-gold, red.

Iron oxide coated metallic flakes, especially aluminum-based flakes are very bright and opaque, that is why they are widely used in automotive coatings. The pigments customarily used in this field are based on aluminum platelets and exhibit a metallic mirror effect. Iron oxide coated aluminum pigments are known for brilliant colors in the golden to red color area.

Iron oxide layers of effect pigments can be provided on the metallic substrate particles by gas phase decomposition of volatile iron compounds in the presence of oxygen and/or water vapor (so-called chemical vapor deposition) or by a wet chemical coating process (e.g., sol-gel or precipitation process).

US 7,387,669 refers to luster pigments having pronounced sparkle which are based on aluminum platelets which have been coated with iron oxide and have in the precoated state an average platelet size from 8 to 30 µm, an average platelet thickness from 300 to 600 nm and an aspect ratio from 15 to 70.

US 5,277,711 refers to dry mixtures useful as luster pigments, comprising A) iron oxide-coated aluminum particles and B) iron oxide-coated mica particles with or without a prior coating of a colorless, highly refractive metal oxide as essential components. The synthesis was done via CVD-coating of Al/mica blends with iron oxide. The main target of that patent was to reduce or eliminate the ignitability of and the dust explosion hazard represented by aluminum pigments coated with iron oxide, in particular with Fe₂O₃.

EP2838956B1 refers to the alternative to the synthesis of iron oxide coated aluminum flakes via chemical vapor deposition: A wet chemical preparation method is described which avoids handling of a dry pigment powder which may trigger the risk of an aluminothermic (e.g. thermite) reaction.

WO 2015/040537 A1 (US10800926B2) refers to a wet chemical synthesis for coating Al-flakes with iron oxide. It claims that the doping of the iron oxide layer on the aluminum-based substrate (which may optionally be passivated) with aluminum results in an effect pigment which is non-magnetic or non-magnetizable but still shows pronounced flop characteristics (light/dark contrast) and a brilliant color.

WO2018/186838A1 refers to effect pigments in the red, fuchsia, and magenta color space. The multilayer effect pigments include a platy substrate comprising an absorbing optically active metal oxide layer thereon, having an optical thickness from about 20 nm to about 400 nm; a layer of low refractive index material on the absorbing optically active metal oxide layer and having an optical thickness from about 10 nm to about 500 nm; and an outermost optically active layer of a non-absorbing high refractive index material on the low refractive index material and having an optical thickness from about 50 nm to about 1000 nm. In some embodiments, the platy substrate includes natural mica, synthetic mica, glass flakes, SiO2, Al₂O₃, talc, bismuth oxychloride, natural pearl, perlite, boron nitride, zinc oxide, a natural silicate, a synthetic silicate, or a combination of any two or more thereof.

US 8,529,876 / EP 2 675 423 B1) refers to mixtures of mica based effect pigments showing a hue comparable to carmine for cosmetics. A first effect pigment like iron oxide coated mica is blended with a second effect pigment that consists of a transparent substrate and one or more colorless metal oxide layers. The resulting composition has a carmine like color angle of about 340 to 360°.

EP 881998B1 refers to improved pearlescent pigments for exterior use. A pearlescent pigment having improved humidity resistance and weatherability is realized by a metal oxide-coated mica pearlescent pigment which has on the surface an aluminum- or an aluminum-cerium treatment combined with a hydrolyzed silane coupling agent treated surface.

US9957370 refers to metallic effect pigments with coating, comprising a platelet-shaped substrate, where the coating comprises at least one hybrid inorganic/organic layer, the hybrid layer having at least partly an inorganic network that has one or more inorganic oxide components, and having at least one organic component, the organic component being at least partly an organic oligomer and/or polymer which is covalently bonded at least partly to the inorganic network via one or more organic network formers.

Iron oxide coated aluminum pigments are very bright, chromatic and opaque, which is why they are widely used in automotive coatings. Golden and orange iron oxide coated aluminum flakes have been used for almost 30 years in automotive basecoats. More recently more red grades have been used. Meanwhile designers are requesting more blue-shade red effect pigments to access new color space, and that is only possible with new and advanced effect pigments.

The problem to be solved with the present invention is to improve the poor appearance that is evident when using existing blue-shade red effect pigments in automotive basecoats. Poor appearance can be seen, for example, as low distinctness of image (DOI) values causing fuzzy mirror images of basecoat/clearcoat due to rough basecoats and bad hiding, which results from thick Al-flakes. A thick Al-flake has the hiding of a single flake and the weight of 2-3 thin flakes. The improved appearance of the pigment of the present invention is exhibited in the properties as shown in Table 1 in the examples section below. Additionally, the use of a wet chemical process instead of dry pigment powder, is known to be a safer way to handle pigments.

The pigments of the present invention are produced by a combination of process steps that has not been previously described, resulting in an effect pigment that was not previously possible.

Blue-shade red iron oxide coated aluminum flakes require a thicker oxide layer, which usually results in higher oxide concentrations and thus raises safety aspects with regards to aluminothermic reactions. Effect pigments based on oxide coated aluminum flakes may trigger at higher temperatures or after ignition an aluminothermic reaction. Aluminothermic reactions are highly exothermic chemical reactions between aluminum acting as a reducing agent and a metal oxide such as iron oxide or titanium oxide. The most prominent example is the thermite reaction between aluminum and iron oxide. However, aluminum may also react with a titanium oxide or other oxides such as SiO₂.

For that reason, especially pigments with concentrations of aluminum and oxide close to the stoichiometric ratio of the thermite reaction must be handled safely in production scale by minimizing the risk of initiating an aluminothermic reaction.

The access to more bluish colors of iron oxide comprising aluminum flakes is also limited through the selective absorption of iron oxide. That means the more bluish the interference color of an iron oxide film goes through increasing the thickness, the weaker the observed chroma of the pigment is. For that reason, the end of the first series of interference colors appears as grayish-violet dull color and the second series also ends with a chromatic red that goes achromatic with further increasing thickness of Fe₂O₃.

The only pigment which is seen as a real blue-shade red effect pigment was mentioned in US 7,387,669. That pigment (Paliocrom^{®} Sparkling Red L 3505, Sunchemical) is based on Al-flakes of an average platelet size from 8 to 30 µm, an average platelet thickness from 300 to 600 nm and an aspect ratio from 15 to 70. Due to the low aspect ratio the thick iron oxide layer, which is needed for a blue-shade red color at the end of the second interference series, can be safely applied in the CVD process. The low aspect ratio of the Al-flake results in a low BET-surface resulting in an iron oxide layer of 100 nm and more at lower and thus safer Fe₂O₃ amounts.

On the other hand, the low aspect ratio results in limited coloristic appearance and hiding power when normal or higher amounts of such flakes are used in a pigmentation. Limited coloristic appearance refers to: lower gloss values in basecoat / clearcoat systems; lower DOI (Distinctiveness of Images); haze; reduced flop index; and higher graininess values.

Lower hiding power is also a result of thicker flakes, or in other words thicker and thus more heavy flakes have, at the same flake diameters, a lower number of flakes per weight unit compared to thinner flakes.

Al-flakes with a significantly lower average thickness (i.e. flakes with a higher aspect ratio) cannot be coated safely via CVD in a dry process with iron oxide to a blue-shade red shade like that of Paliocrom Sparkling Red L 3505. The dry powder of a blue-shade red based on thinner Al-flakes could lead to unsafe handling with regards to ignition or aluminothermic reaction.

The alternative wet chemical process for iron oxide coated Al-flakes requires in a first step the passivation of Al-flakes with a thin layer of silica. In a second step, the Fe₂O₃ layer is applied. All attempts thus far to get a blue-shade red based on Al / SiO₂ / Fe₂O₃ did not result in the desired chromatic blue-shade red shade of the benchmark Paliocrom Sparkling Red. With increasing Fe₂O₃ layer intense red colors can be achieved, however with further increased Fe₂O₃ thickness a chroma decrease was observed, which means highly chromatic bluish reds of the composition Al/SiO₂/Fe₂O₃ were so far not possible via wet chemical synthesis.

Citation or identification of any document in this application is not an admission that such represents prior art to the present invention.

### DETAILED DESCRIPTION

The present invention is defined by the appended claims and relates to blue-shade red effect pigments comprising a blend of (a) an Intermediate 1 comprising an optionally passivated metallic flake substrate coated with silica and iron oxide; and (b) an Intermediate 2 comprising a mica flake (natural or synthetic) coated with a first layer of Fe₂O₃ or TiO₂; a second layer of SiO₂; and a third layer of Fe₂O₃ or TiO₂, wherein the ratio of intermediate 1: intermediate 2 is in the range of 99:1 to 60:40, by mass based on the dry forms of the intermediates.

Further, the invention relates to a process for manufacturing said blue-shade red effect pigment by a wet chemical preparation method.

The process includes;
(a) the synthesis of an Intermediate 1 by coating a metallic flake substrate (preferably Al-flakes) with silica and iron oxide;
(b) the synthesis of an Intermediate 2 by coating synthetic or natural mica flakes with a first layer of Fe₂O₃ or TiO₂, a second layer of SiO₂, and a third layer of Fe₂O₃ or TiO₂;
(c) blending of Intermediate 1 + Intermediate 2;
wherein the ratio of intermediate 1: intermediate 2 is in the range of 99:1 to 60:40, by mass based on the dry forms of the intermediates.

Further, the invention relates to a pigment combination comprising said blue-shade red effect pigment and a further colored absorption pigment in a specific weight ratio, and an article coated with a composition comprising said blue-shade red effect pigment or said pigment combination, and to the use of said blue-shade red effect pigment or said pigment combination for coloring a coating composition such as a paint, a printing ink, a varnish, plastics, a fiber, a film or a cosmetic preparation, In one embodiment the composition would be an automotive, an architectural or an industrial coating composition.

The only blue-shade red effect pigment of the "Paliocrom type" (i.e. a blue-shade red effect pigment based on iron oxide coated aluminum flakes) currently in the coatings market is Paliocrom Sparkling Red L 3505. The subject of the present application is to offer superior alternatives to that pigment with a better coloristic appearance, which also has improved safety during synthesis at production scale.

A blue-shade red effect pigment with better performance than the state of the art was achieved by synthesizing two intermediates which were combined in an optimized ratio (as shown in the examples) either before or after or without surface treatment. Preferably the combined intermediates were surface treated in a finishing step as a blend to get the desired superior blue-shade red effect pigment. But separate surface treatment of Intermediate 1 and 2 is also possible followed by blending with the optimized ratio. For applications where exterior properties are not required, Intermediate 1 and 2 are blended preferably in a suspension of for example iso-PrOH or propylene glycol or mineral spirits. Dry blending of intermediate 1 and 2 is in principle possible, but due to possible safety concerns with intermediate 1 is less preferred.

The synthesis can be described as 3-step synthesis:
1. Synthesis of Intermediate 1 (a Paliocrom Red, preferably based on a superior silver dollar type flake. Pigment structure: Al/SiO₂/Fe₂O₃)
2. Synthesis of Intermediate 2 (a mica or synthetic mica-based interference pigment with high chroma with bluish red to blue color. Pigment structure: (synthetic) mica/(TiO₂ or Fe₂O₃)/SiO₂/(TiO₂ or Fe₂O₃)
3. Combining (blending) of Intermediates 1 & 2 optionally in combination with a surface treatment in case exterior properties are required.

In a first embodiment, Intermediates 1 & 2 would be combined (blended) without any surface treatment.

In a second embodiment, Intermediates 1 & 2 would first undergo individual surface treatment and subsequently be combined.

In a third embodiment, Intermediates 1 & 2 would first be combined and then subsequently would simultaneously undergo surface treatment either during or after the blending stage.

The ratio of intermediate 1 : intermediate 2 is in the range of 99:1 to 60:40, preferably 97:3 to 70:30, more preferably 80:20 to 70:30 by mass based on the dry forms of the intermediates. The ratio of intermediate 1 : intermediate 2 may also be in the range of 95:5 to 80:20 or in the range of 95:5 to 88:12, by mass based on the dry forms of the intermediates.

In a preferred embodiment, the ratio of intermediate 1 : intermediate 2 is in the range of 97:3 to 70:30, especially in the range of 80:20 to 70:30, by mass based on the dry forms of the intermediates and the metallic flake substrate in intermediate 1 is an aluminium flake substrate, which may optionally be passivated. The optionally passivated aluminium flake substrate is coated with silica and iron oxide.

The resulting pigment exhibits in full shade (sprayed as masstone) the following characteristics compared to state of the art (Paliocrom Sparkling Red L 3505):
Similar blue-shade red
Higher chroma and/or
Higher Lightness and/or
Higher Flop index and/or
Better sparkle and/or
Lower graininess and/or
Better hiding and/or
Better DOI

The surface treated blends of the present invention have not yet been disclosed:
Al/SiO₂/Fe₂O₃ + mica/TiO₂ /SiO₂/TiO₂
Al/SiO₂/Fe₂O₃ + mica/Fe₂O₃/SiO₂/TiO₂
Al/SiO₂/Fe₂O₃ + mica/TiO₂ /SiO₂/Fe₂O₃
Al/SiO₂/Fe₂O₃ + mica/Fe₂O₃ /SiO₂/Fe₂O₃
Al/SiO₂/Fe₂O₃ + synth. mica/TiO₂ /SiO₂/TiO₂
Al/SiO₂/Fe₂O₃ + synth. mica/Fe₂O₃/SiO₂/TiO₂
Al/SiO₂/Fe₂O₃ + synth. mica/TiO₂ /SiO₂/Fe₂O₃
Al/SiO₂/Fe₂O₃ + synth. mica/Fe₂O₃ /SiO₂/Fe₂O₃

Details of how the pigments of the present invention are superior can be found in the Example section.

The particle size ranges (d50 values) of the raw materials for Intermediate 1 and Intermediate 2 are typically 5 - 200 µm, preferably 7 - 70 µm. The median particle size d50 is preferably selected between 9 and 22 µm. Starting materials with a d50 of more than 23 µm are already detrimental for automotive applications, causing appearance problems.

The d₅₀-value in the cumulative frequency distribution of the volume-averaged size distribution function (median diameter, particle size distribution), as is obtained by laser scattering methods, indicates that 50% of the effect pigments have a diameter which is the same as or smaller than the respectively indicated value. In this case, the size distribution curve is determined using an instrument from Malvern Instruments Ltd. (Mastersizer 3000) in accordance with manufacturer indications. The sample is usually prepared by dispersing the sample to be analyzed in 2-propanol by use of an ultrasound dispersion unit.

As will be appreciated, the term "laser scattering" as used herein refers to laser diffraction, preferably performed as described in the previous paragraph. The particle size distribution and d50 values of the substrates described herein are measured using laser scattering (i.e. laser diffraction).

### Passivation and oxide coating of Al-flakes (Intermediate 1)

According to one embodiment, the invention relates to a blue-shade red effect pigment, wherein the effect pigment comprises an aluminum substrate which is passivated with a layer of a metal phosphate, aluminum oxide, hydrated aluminum oxide or a combination thereof.

### Metallic substrates for Intermediate 1 (PVD aluminum, classical cornflake Al or silver dollars)

The metallic substrates may be of a wide range of metals used in the field of effect pigments. The metallic substrate is usually in the form of platelets or flakes. The metallic substrate may be selected for example from aluminum, steel, silver, copper, gold-bronze (brass), zinc, zirconium, tin, titanium, alloys thereof, and combinations thereof. The metallic substrates are preferably aluminum-based, iron, copper or gold-bronze. An aluminum substrate is most preferred.

The metallic substrate may optionally be passivated. A passivated metallic substrate is one that is coated with one or more passivation layers. As will be appreciated by one skilled in the art in light of the present disclosure, the silica layer that is present on the metallic substrate of intermediate 1 functions as a passivating layer. However, the substrate may have further passivating layers underneath the silica layer, in which case the substrate is described herein as passivated (if there is no such layer underneath the silica layer, the substrate is described herein as unpassivated). For example, in the case where the metallic substrate of intermediate 1 is an aluminum metallic flake substrate, as is preferable, an aluminum oxide layer may be present as a passivating layer on the substrate. Such a layer generally forms immediately on aluminum surfaces and is referred to as "natural passivation". In the present invention, when such a substrate is used, the silica and iron oxide layers are applied on top of the aluminum substrate coated with an aluminum oxide passivating layer. The silica layer is applied before the iron oxide layer. Alternatively, an aluminum substrate may be used which is passivated with a different substance such as a metal phosphate, as described further below. In such a situation, an aluminum substrate is used for intermediate 1 which is passivated with a metal phosphate, and then a silica layer is applied to this substrate before an iron oxide layer is applied on top of the silica layer.

In another embodiment, the metallic substrate is an aluminum-based substrate. Appropriate aluminum-based substrate particles are generally known to the skilled person. The aluminum-based substrate particles may be made of an aluminum core or aluminum alloy core which may be at least partly coated with one or more passivation layers.

The aluminum or aluminum alloy core is usually in the form of platelets or flakes, for example aluminum alloy or aluminum.

The aluminum or aluminum alloy platelets or flakes may be obtained by means of PVD (Physical Vapor Deposition) techniques or by common atomizing and grinding techniques. Suitable aluminum or aluminum alloy platelets are produced, for example, by the Hall process by wet grinding in white spirit. The starting material is an atomized, aluminum grit which is ball-milled in white spirit in the presence of lubricant into platelet-shaped particles and subsequently classified. Also, dry grinding of aluminum powder is possible.

The metallic substrate is more preferably aluminum. The aluminum substrate may be of the "cornflake" type or of the "silver dollar" type depending on the quality and shape of the starting granules and on the milling conditions.

Alternatively, the aluminum platelets may be produced via PVD techniques, also known as VMP (Vacuum Metallized Pigment). Aluminum is coated preferably in a vacuum on a plastic foil pre-prepared with a release layer. By dissolving the release layer, aluminum flakes are usually produced which are further sized down by mechanical impact like stirring and classified to the desired particle diameter. The average thickness of the produced flakes is generally about 5 to 100 nm, preferably about 10 to 50 nm. Usually, the prepared flakes show uniform thickness distribution and high hiding power.

Average thickness and average particle size of the metallic substrates, especially the aluminum or aluminum alloy platelets, may be varied over a broad range. Typically, the average geometric thickness of the metallic platelets, especially aluminum-based platelets, may be within the range of 10 nm to 1500 nm, preferably 70 to 1000 nm, more preferably 80 to 500 nm, and most preferably 80 to 400 nm.

The thickness of the platelets is usually determined by transmission electron microscopy (TEM) or scanning electron microscopy (SEM) produced on cross cuts of about 100 flakes. For this purpose, a thin film of a coating containing the aligned flakes is cut and analyzed via SEM or TEM, wherein the geometric thickness values of about 100 platelets are investigated and averaged statistically.

The average diameter of the platelets, especially aluminum-based platelets, may be within the range of 3 µm to 100 µm, preferably 5 to 25 µm. Preferably, d50 is in the range of about 9 µm to about 22 µm, as measured by laser scattering. The average diameter (d50) may be determined by laser scattering (laser diffraction) size determinations, as described in further detail above.

Typically, the aspect ratio of average diameter to average thickness may be within the range of 10 to 1000, preferably 50 - 250.

The metal platelets, especially the aluminum or aluminum alloy platelets, have a BET surface area (measured by nitrogen absorption) of from 0.5 to 80 m²/g, preferably 0.8 to 50 m²/g.

As mentioned above, the aluminum or aluminum alloy core of the aluminum-based substrate particles may at least partially be coated with one or more passivation layers, for example completely coated with one or more passivation layers.

Appropriate passivating layers are generally known to the skilled person. The passivating layer is preferably an inorganic layer such as a metal phosphate layer, or an inorganic oxide layer. If the inorganic passivating layer is a metal phosphate layer, the metal may be selected from Ti, V, Cr, Mn, Fe, Co, Ni, Cu, Zn, Al, Zr, Nb, Mo, Ta or W. If the inorganic passivating layer is an inorganic oxide layer, the oxide may be selected from Ti, V, Cr, Mn, Fe, Co, Ni, Cu, Zn, Al, Zr, Nb, Mo, Ta, W, Ge, Sn and Bi oxides or any combination thereof.

Preferably, the passivating layer is a "natural" passivating layer selected from a metal phosphate layer, an aluminum oxide layer, a hydrated aluminum oxide (AlOOH) layer or a combination thereof.

Methods for preparing a passivating layer on an effect pigment substrate such as aluminum platelets are generally known to the skilled person.

In principle, a passivating layer may be produced by a wet chemical method or a chemical vapor deposition (CVD) method. For example, aluminum pigments passivated with a layer of aluminum oxide and/or hydrated aluminum oxide are described in WO-A-96/38505 or WO-A-2005/049739.

In the wet chemical process, appropriate precursor compounds such as organic silicon and/or aluminum compounds in which the organic groups are bonded to the metals via oxygen atoms are hydrolyzed in the presence of the substrate particles (e.g., aluminum flakes or platelets) and of an organic solvent in which the metal compounds are soluble. Preferably, a metal alkoxide (especially tetraethoxysilane and aluminum triisopropoxide) is hydrolyzed with water in the presence of an alcohol (e.g., ethanol or 2-propanol) and a basic and/or acid catalyst (e.g. aqueous ammonia and/or amines as basic catalysts, e.g. phosphoric acid or organic acids like acetic acid or oxalic acid). This is preferably done by initially charging substrate particles, ethanol, water and ammonia, heating this mixture to from 40°C to 90°C, with stirring and continuously adding a solution of the metal alkoxide in ethanol and water or aqueous ammonia. Following a subsequent stirring time of usually from 1 to 15 hours, the mixture is cooled down to room temperature, and the coated pigment is isolated by filtering off, washing and optionally drying. Further details about the method of preparing a passivating layer on aluminum are provided, e.g., in EP-A-0708154, DE-A-4405492 or WO-A-2011/95341. Such methods may be used to form the silica layer on intermediate 1.

The platelet-shaped metallic substrate of intermediate 1, which is preferably an aluminum substrate, is coated with silica and iron oxide. The silica layer is applied before the iron oxide layer. The geometric thickness of the silica layer is preferably in the range of about 20 nm to about 100 nm, more preferably about 50 nm to about 70 nm.

### Iron oxide coating of the Al substrate -> Intermediate 1

Intermediate 1 may be manufactured by coating optionally passivated platelet-shaped metallic substrates that are coated with silica as described above, by a wet chemical method of hydrolytic decomposition of an iron(III) salt in a liquid medium. The synthesis of Intermediate 1 comprises:
(a) providing an optionally passivated platelet-shaped metallic substrate that is coated with silica, and
(b) coating the substrate in a liquid medium comprising an iron oxide precursor compound.

As such, the iron oxide layer is generally applied on top of the silica layer.

As indicated above, the substrate is coated in a liquid medium, which comprises an iron oxide precursor compound and optionally an aluminum compound. Usually, the liquid medium is an aqueous medium, typically containing water in an amount of from 10 to 100 wt% or from 30 to 100 wt%, based on the total amount of liquids in the aqueous medium.

Aluminum compounds may be aluminum salts such as aluminum sulphate, aluminum halides, aluminum nitrate, aluminum phosphate, hydrolysable aluminum compounds such as aluminum alkoxides or mixtures thereof.

The iron oxide layer may be produced by a wet chemical method. The wet chemical process may be carried out by hydrolysis of suitable iron oxide precursor compounds, for example, inorganic salts such as iron nitrate, iron sulfate or iron chloride, with or without simultaneous oxidation of other especially organic iron compounds, such as iron acetate, iron formate, iron citrate, iron acetylacetonate and ferrocene, in the presence of substrate particles suspended in water and/or organic solvents, and with or without subsequent calcination. The coating process is generally performed until the desired interference color is obtained. A thermal treatment transfers the hydroxyl-containing iron oxide layer into a hematite (Fe₂O₃) containing layer.

The iron oxide layer may be applied onto the substrate at acidic or basic pH. Preferably, the liquid medium has a pH or 5 or less, more preferably 4 to 2. Preferably, the pH of the aqueous medium is kept constant while applying the iron-oxide layer or the Al-doped iron oxide layer on the substrate. The temperature may be varied over a broad range, such as at least 20 to 100°C.

Preferably, the pigment obtained in step b) is subsequently subjected to a thermal treatment step, for example, for drying the pigment and/or effecting further condensation in the iron oxide layer. The thermal treatment step may be carried out by calcination at about 280 to 340°C for at least 15 min. Alternatively, the effect pigment obtained in step b) may be subjected to a medium comprising one or more high boiling solvents and heating at a temperature of at least 90°C for at least 0.5 hours.

High boiling solvents usually have a boiling point of from 90 to 400°C, more preferably 100 to 300°C. Examples include monohydroxyl alcohols, diols or polyols, glycol ethers, polyglycol ethers, aldehydes, esters, carbonate esters, lactams such as NMP, ethers, alkanes or mineral oils.

The effect pigment may be filtered to obtain a wet paste.

Preferably, Intermediate 1 of the blue-shade red effect pigment has only one iron oxide layer. Usually, Intermediate 1 does not have a further metal oxide layer of high refractive index, i.e. higher than 1.8.

Refractive indices referred to herein are those measured at 633nm.

### Nature of the iron oxide layer in Intermediate 1

The term "iron oxide" used herein means α-iron(III) oxide in particular. However, the term iron oxide also comprises mixtures of α-iron(III) oxide with minor amounts of γ-iron(III) oxide, magnetite (Fe₃O₄), hydrated iron oxide or iron oxide hydroxide (e.g., FeO(OH), Fe₂O₃.H₂O, Fe₂O₃.nH₂O with n ≥ 2, Fe(OH)₃, Fe(OH)₂ or a mixture of two or more of these hydroxyl-containing iron-oxides). Preferably, Fe atoms are present as Fe(III). However, within the present invention Fe atoms may also be present as Fe(II).

The iron oxide layer may be doped with up to 10 wt% aluminum, based on the total amount of iron and aluminum atoms in the aluminum-doped iron oxide layer. The aluminum concentration in the iron oxide layer may be determined by TEM in combination with EDXS (energy dispersive X-ray spectroscopy), as mentioned, for example, in WO-2015/040537.

Preferably, the aluminum-doped iron oxide layer contains from 0.05 wt% to 10 wt% Al or from 0.5 to 8 wt% or from 0.5 to 6 wt%, based on the total amount of Fe and Al atoms in the Al-doped iron oxide layer.

Usually, the Al concentration in the substrate-near part of the Al-doped iron-oxide layer is higher than the Al concentration in the substrate-remote part of the Al-doped iron oxide layer.

The geometric thickness of the iron oxide coating is preferably about 120 nm to about 500 nm, more preferably about 130 nm to about 450 nm, even more preferably about 150 nm to about 350 nm.

Therefore, the substrate of intermediate 1, which is preferably an aluminum metallic flake substrate, is preferably coated with a silica layer having a geometric thickness of about 20 nm to about 100 nm and an iron oxide layer on top of the silica layer having a geometric thickness of about 120 nm to about 500 nm. More preferably, the substrate of intermediate 1, which is preferably an aluminum metallic flake substrate, is coated with a silica layer having a geometric thickness of about 50 nm to about 70 nm and an iron oxide layer on top of the silica layer having a geometric thickness of about 150 nm to about 350 nm.

Geometric layer thickness may be determined on the basis of TEM micrographs of crosscuts of the intermediates.

Optical thickness is the product of geometric thickness x refractive index.

### Substrates for Intermediate 2 (synthetic mica or natural mica)

The substrate for Intermediate 2 is mica flakes, whether natural or synthetic. The size of the platelet shaped substrate is not critical per se and can be adapted to the particular use. Generally, the particles have largest major dimensions averaging about 5-250 microns, preferably 5-100 microns, and an aspect ratio greater than about 5. Therefore, d50 may be in the range of about 5-250 microns, preferably 5-100 microns, as measured by laser scattering. A d50 value in the range of about 9-22 microns as measured by laser scattering is most preferred. The laser scattering method is preferably performed as described in further detail above. Their specific free surface area (BET) is, in general, from about 0.2 to 25 m² /g.

Suitable platy substrates, natural or synthetic, may be transparent or semitransparent and sturdy enough to function as a stable support for metal oxide layers.

The platy substrate is natural mica or synthetic mica. In certain embodiments, the platy substrate includes synthetic mica, such as, but not limited to fluorophlogopite.

### Oxide coatings of substrates for Intermediate 2

Intermediate 2 comprises several metal oxides which are forming a so-called multilayer system of thin films with different refractive indices. The preferred layer sequence on the substrate is high refracting / low refracting / high refracting.

Intermediate 2 includes a first coating of a high refracting and thus optically active metal oxide layer, which can be absorbing or non-absorbing on the platy substrate. The first coating layer is generally Fe₂O₃ or TiO₂. In some embodiments, the optically active metal oxide layer includes SnO₂-doped titanium oxide, iron oxides, iron hydroxides, and combinations thereof. In some embodiments, the first optically active metal oxide layer is iron oxide or SnO₂-doped titanium oxide. Suitable iron oxides may include, but are not limited to, hematite, magnetite, or maghemite. In one embodiment, the iron oxide layer includes hematite or maghemite.

Suitable titanium oxides are rutile or anatase.

The geometric thickness of the first layer on intermediate 2 is generally about 5 nm to about 150 nm, preferably about 15 nm to about 70 nm.

Intermediate 2 includes a second coating of low refractive index material layer coated on the first optically active metal oxide layer. In some embodiments, the low refractive index material has a refractive index of less than or equal to 1.8. This includes, but is not limited to, refractive indices from about 1.30 to about 1.80. In one embodiment, the refractive index is from about 1.30 to about 1.50. In another embodiment, the refractive index is from about 1.40 to about 1.50.

In some embodiments, the low refractive index material includes, but is not limited to, silica, magnesium oxide, aluminum oxide, or combinations thereof. In some embodiments, the low refractive index material is silica. This includes amorphous silica.

The geometric thickness of the second layer on intermediate 2 is generally about 5 nm to about 300 nm, preferably about 10 nm to about 110 nm.

Intermediate 2 includes a third coating of a high refracting and thus optically active metal oxide layer, which can be absorbing or non-absorbing on the platy substrate. In some embodiments, the third layer is made of high refractive index material and includes but is not limited to titania, zirconium oxide, tin oxide, zinc oxide, iron oxide or combinations thereof. In some embodiments, the high refractive index material is titania. It is preferred that the third coating on intermediate 2 is titania.

Suitable types of titania include, but are not limited to, anatase, rutile, or a mixture thereof. In one embodiment, the high refractive index material layer includes rutile and/or anatase titania. An advantage of using titania as the high refractive index material includes, but is not limited to, titania having a refractive index of about 2.55.

In one embodiment, the high refractive index material layer is selectively absorbing and includes iron oxides. Suitable iron oxides may include, but are not limited to, hematite, magnetite, or maghemite. In one embodiment, the iron oxide layer includes hematite or maghemite.

The geometric thickness of the third layer on intermediate 2, which is preferably a layer of TiO₂, is generally about 5 nm to about 400 nm, preferably about 15 nm to about 200 nm.

Intermediate 2 therefore preferably comprises synthetic or natural mica flakes as described above, coated with a first layer of Fe₂O₃ or TiO₂, wherein the first layer has a geometric thickness of from about 5 nm to about 150 nm and a second layer of silica having a geometric thickness of from about 5 nm to about 300 nm and a third layer of Fe₂O₃ or TiO₂, wherein the third layer has a geometric thickness of from about 5 nm to about 400 nm. The pigment of the invention preferably comprises a blend of this intermediate 2 with intermediate 1 as defined above, in which the substrate of intermediate 1, which is preferably an aluminum metallic flake substrate, is preferably coated with a silica layer having a geometric thickness of about 20 nm to about 100 nm and an iron oxide layer on top of the silica layer having a geometric thickness of about 120 nm to about 500 nm. In said blend, the ratio of intermediate 1 : intermediate 2 is in the range of 99:1 to 60:40, by mass based on the dry forms of the intermediates. Preferably, the ratio of intermediate 1 : intermediate 2 is in the range of 97:3 to 70:30, most preferably 80:20 to 70:30, by mass based on the dry forms of the intermediates.

More preferably, intermediate 2 comprises synthetic or natural mica flakes as described above, coated with a first layer of Fe₂O₃ or TiO₂ (preferably Fe₂O₃ or SnO₂-doped titanium oxide) wherein the first layer has a geometric thickness of from about 15 nm to about 70 nm and a second layer of silica having a geometric thickness of from about 10 nm to about 110 nm and a third layer of Fe₂O₃ or TiO₂, wherein the third layer has a geometric thickness of from about 15 nm to about 200 nm. The pigment of the invention preferably comprises a blend of this intermediate 2 with intermediate 1 as defined above, for example an intermediate 1 in which the substrate, which is preferably an aluminum metallic flake substrate, is coated with a silica layer having a geometric thickness of about 50 nm to about 70 nm and an iron oxide layer on top of the silica layer having a geometric thickness of about 150 nm to about 350 nm. In said blend, the ratio of intermediate 1 : intermediate 2 is in the range of 99:1 to 60:40, by mass based on the dry forms of the intermediates. Preferably, the ratio of intermediate 1 : intermediate 2 is in the range of 97:3 to 70:30, most preferably 80:20 to 70:30, by mass based on the dry forms of the intermediates.

### Surface treatment of blend of Intermediate 1 + Intermediate 2

Methods for surface modification of effect pigments and appropriate surface modifying agents such as silanes having surface-reactive functional groups (e.g., alkoxysilanes etc.) are known to the skilled person and may improve compatibility of the effect pigment with the varnish or lacquer. Surface modification methods and agents are described, for example, in EP-A-1682622, EP-A-1904587, WO-A-99/57204, EP-A-1812519, EP-A-0688833 and EP0881998.

The blue-shade red effect pigment comprising Intermediate 1 + Intermediate 2 may be treated with one or more additional layers that are preferably selected from a silica layer, a polymer layer, an organosilane layer, or any combination or mixtures thereof.

The geometric thickness of the final layer may be 2 to about 50 nm, preferably 2 to 30 nm, more preferably 2 to 20 nm. The appropriate geometric thickness of this layer depends on the kind of surface modification.

In one embodiment, the blue-shade red effect pigment contains one final layer which is selected from an SiO₂ layer, a polymer layer, an organosilane layer, or combinations thereof. The term "final layer" is synonymous to the "outermost layer". Such surface modification is usually adapted to the particular end-use. With such final layer, surface polarity of the blue-shade red effect pigment can be adjusted, which in turn may improve bonding of the effect pigment to a binder system, for example of a paint or an ink.

For the pigment surface modification step, the effect pigment may be provided in a liquid medium containing at least one surface-modifying agent. However, it is also possible to bring the surface-modifying agent into contact with the effect pigment of a calcination step via the gas phase.

In another embodiment, the blue-shade red effect pigment is surface treated in aqueous suspension with Al- and Cerium oxides followed by a silane treatment. While other salts can be used, nitrate salts are preferred. It is also preferred to deposit about 0.01 - 1.5% cerium hydroxide, more preferably 0.2-0.6%, calculated as weight percent cerium and about 0.1-1%, more preferably 0.2-0.6%, aluminum hydroxide, calculated as weight percent aluminum, based on the weight of the pigment. The salts can be added to the slurry individually in either order and precipitated or preferably, added simultaneously and precipitated.

Precipitation is controlled by raising the pH to a value greater than about 5, preferably to a value of about 5.5-7.5.

After that step an additional treatment with a hydrolyzed silane coupling agent or a mixture of such agents is done. As known, these are compounds which act as an interface between an organic material and an inorganic material to enhance the affinity between the two. Thus, the silane coupling agents generally have both an organo functional group and a silicon functional group bonded either directly or indirectly to silicon. The silicon functional groups are generally alkoxy groups and preferably CIA alkoxy groups.

Examples of silane coupling agents which can be used in the present invention are gamma-(2-aminoethyl) aminopropyl trimethoxy silane, aminopropyl trimethoxy silane, gamma-aminopropyl triethoxy silane, gamma-(2aminoethyl)aminopropyl methyl dimethoxy silane, gammamethacyryloxypropyl methyl trimethoxy silane, gammamethacyryloxypropyl trimethoxy silane, gammaglycidoxypropyl trimethoxy silane, gamma-mercaptopropyl trimethoxy silane, vinyltriacetoxysilane, gammachloropropyl trimethoxy silane, vinyltrimethoxy silane, octadecyldimethyl- [3-(trimethoxysilyl) -propyl] ammonium chloride, gamma-mercaptopropyl-methyl-dimethoxy silane, methyltrichloro silane, dimethyl-dichlorosilane, trimethylchlorosilane, gamma-isocyanatopropyl triethoxy silane and the like.

The silane coupling agent should be selected so that it is suitable for any organic material in the coating vehicle which will be combined with the pigment in use. When the organic material is a polyester, the organo functional group preferably comprises a methacryl group. When it is a urethane, an amino functional coupling agent is preferred. For acrylic vehicles, the aminoethyl, aminopropyl, methacryloxypropyl, and glycidaloxypropyl trimethoxy silanes are suitable. More recent results indicate that best results occur with combination of amino & non-amino coupling agents.

The pigment is treated with the silane coupling agent by wet mixing. For instance, an aqueous solution of the agent in water or a mixture of water and an organic solvent can be added to the aqueous slurry of the pearlescent pigment. The silane is preferably prehydrolyzed such as, for instance, by stirring the coupling agent in water for a suitable period of time.

It is also possible to effect hydrolyzation at the time of mixing. **In** general, about 0.1 to 10 wt%, preferably about 0.25 to 5 wt%, of the silane coupling agent is used based on 100 parts by weight of pigment being treated.

The coupling agent and pigment can be combined for a period of time sufficient to allow reaction to occur, which may last from a few minutes to several hours or more, preferably about 3 to 24 hours. Thereafter the treated pigment can be recovered in the conventional fashion such as by filtration, centrifugation and the like, and dried.

It is also possible to add the silanes after the Al/Ce treatment without the prehydrolizing step.

It is also possible to combine, if desired, the coupling agent treatment with the aluminum/cerium treatment.

The most preferred surface treatment protocol in the present invention is to surface treat intermediates 1 and 2 separately before blending them together, wherein intermediate 1 is surface treated with silica and at least one polymer, preferably a polymer formed from a silane and an acrylate monomer (such as trimethylolpropane trimethacrylate (TMPTMA)), and intermediate 2 is surface treated with aluminum oxide, cerium oxide and at least one silane. The most preferred surface treatment for intermediate 1 involves applying further silanes after the application of the silica layer and polymer described above, such as a mixture of octyltriethoxysilane and 3-aminopropyltrimethoxysilane. The most preferred silanes to use for the intermediate 2 surface treatment are a mixture of 3-glycidoxypropyl trimethoxy silane and 3-aminopropyl triethoxy silane.

Application of the blue-shade red effect pigment in combination with transparent absorption pigments and other effect pigments.

The blue-shade red effect pigment may be suitably mixed with any further pigment, preferably a colored absorption pigment and optionally a further effect pigment, which is different from the present blue-shade red effect pigment, to provide a pigment combination.

The pigment combination of the present invention consists of at least two or three components, wherein the effect pigment (a) is the blue-shade red effect pigments as defined herein, the second pigment (b) is at least one colored absorption pigment, and the optional third pigment (c) is a further effect pigment.

Generally, pigment (b) may be at least one pigment other than an effect pigment or a white pigment. Pigment (b) may be any pigment of any color tone, preferably a pigment having a yellow or red-hued or greenish color tone. A combination with other colored pigments like a black or brown pigment may also be possible to achieve the effect.

Preferably, the colored absorption pigment (b) may be any transparent colored absorption pigment of a color tone ranging from green to yellow to violet or even blue dependent on the desired shade of the application, preferably of the coating. A combination with other colored pigments like a black or brown pigment may also be possible, for example, a transparent carbon black pigment or transparent black perylene pigments.

Transparent pigment used herein refers to a pigment that provides coatings which are substantially transparent in the range of 400 to 700 nm, without appreciable scattering of radiation in such wavelengths.

Pigment (b) may be an organic pigment, an inorganic pigment or a mixture thereof. Preferably, pigment (b) has a color tone suitable to shade the present effect pigment, like yellow, red-hued or greenish.

Accordingly, in a preferred aspect, pigment (b) is a transparent pigment, especially selected from the group consisting of an organic pigment, an inorganic pigment and a mixture thereof.

Organic colored absorption pigments suitable for the present pigment combination typically comprise organic color and black pigments. Suitable examples include a pigment selected from the group consisting of a monoazo, disazo, disazo condensation, anthanthrone, anthraquinone, anthrapyrimidine, benzimidazolone, quinacridone, quinophthalone, diketopyrrolopyrrole, dithioketopyrrolopyrrole, dioxazine, flavanthrone, indanthrone, isoindoline, isoindolinone, isoviolanthrone, metal complex, perinone, perylene, phthalocyanine, pyranthrone, pyrazoloquinazolone, indigo, thioindigo, triarylcarbonium pigment and a mixture thereof, including a solid solution or a mixed crystal thereof.

Suitable examples include the following:
Monoazo pigments: C.I. Pigment Yellow 1, 3, 62, 65, 73, 74, 97, 183 and 191; C.I. Pigment Orange 5, 38 and 64; C.I. Pigment Red 1, 2, 3, 4, 5, 23, 48:1, 48:2, 48:3, 48:4, 49, 49:1, 51, 51:1, 52:1, 52:2, 53, 53:1, 53:3, 57:1, 58:2, 58:4, 63, 112, 146, 148, 170, 184, 187, 191:1, 210, 245, 247 and 251;
Disazo pigments: C.I. Pigment Yellow 12, 13, 14, 16, 17, 81, 83, 106, 113, 126, 127, 155, 170, 174, 176 and 188; C.I. Pigment Orange 16, 34 and 44;
Disazocondensation pigments: C.I. Pigment Yellow 93, 95 and 128; C.I. Pigment Red 144, 166, 214, 220, 221, 242 and 262; C.I. Pigment Brown 23 and 41;
Anthanthrone pigments: C.I. Pigment Red 168;
Anthraquinone pigments: C.I. Pigment Yellow 147 and 199; C.I. Pigment Red 177;
Anthrapyrimidine pigments: C.I. Pigment Yellow 108;
Benzimidazolone pigments: C.I. Pigment Yellow 120, 151, 154, 180, 181; C.I. Pigment Orange 36 and 72, C.I. Pigment Red 175, 185, 208; C.I. Pigment Violet 32; C.I. Pigment Brown 25;
Quinacridone pigments: C.I. Pigment Orange 48 and 49; C.I. Pigment Red 122, 202, 206 and 209; C.I. Pigment Violet 19;
Quinophthalone pigments: C.I. Pigment Yellow 138;
Diketopyrrolopyrrole pigments: C.I. Pigment Orange 71, 73 and 81; C.I. Pigment Red 254, 255, 264, 270 and 272;
Dioxazine pigments: C.I. Pigment Violet 23 and 37;
Flavanthrone pigments: C.I. Pigment Yellow 24;
Indanthrone pigments: C.I. Pigment Blue 60 and 64;
Isoindoline pigments: C.I. Pigment Yellow 139 and 185; C.I. Pigment Orange 69, C.I. Pigment Red 260;
Isoindolinone pigments: C.I. Pigment Yellow 109, 110 and 173; C.I. Pigment Orange 61; Isoviolanthrone pigments: C.I. Pigment Violet 31;
Metal complex pigments: C.I. Pigment Red 257; C.I. Pigment Yellow 117, 129, 150, 153 and 177; C.I. Pigment Green 8;
Perinone pigments: C.I. Pigment Orange 43; C.I. Pigment Red 194;
Perylene pigments: C.I. Pigment Red 123, 149, 178, 179 and 224; C.I. Pigment Violet 29;C.I. Pigment Black 31, 32
Phthalocyanine pigments: C.I. Pigment Blue 15, 15:1, 15:2, 15:3, 15:4, 15:6, 16; C.I. Pigment Green 7, 36;
Pyranthrone pigments: C.I. Pigment Orange 51; C.I. Pigment Red 216; Pyrazoloquinazolone pigments: C.I. Pigment Orange 67 and C.I. Pigment Red 216; Indigo pigments: C.I. Pigment Red 282;
Thioindigo pigments: C.I. Pigment Red 88 and 181; C.I. Pigment Violet 38;
Triarylcarbonium pigments: C.I. Pigment Red 81, 81:1 and 169; C.I. Pigment Violet 1, 2, 3 and 27; C.I. Pigment Blue 1, 61 and 62; C.I. Pigment Green 1;
C.I. Pigment Yellow 101 (Aldazin yellow);
C.I. Pigment Brown 22.

Preferably, the organic pigment is a red or blue-shade red organic pigment, i.e. a C.I. Pigment Red or Blue selected from an anthraquinone, diketopyrrolopyrrole, perylene, indanthrone pigment or any mixture thereof, including a solid solution or a mixed crystal.

Suitable organic pigments are, for example, commercially available under the trademarks Irgazin Rubine L 4030, Irgazin DPP Orange RA, Irgazin Red L 3630, Irgazin Yellow L 0800, Paliogen^{®} Red L 3885 or Paliogen Red L 3920, Paliogen Blue L 6480.

Suitable inorganic pigments may be a transparent red iron oxide pigment (C.I. Pigment Red 101) or a mixture thereof. Especially preferred is a red iron oxide pigment.

Suitable inorganic black or brown pigments may be carbon black (C.I. Pigment Black 7), graphite (C.I. Pigment Black 10) or chrome iron oxide (C.I. Pigment Brown 29).

Suitable inorganic pigments are, for example, commercially available under the trademark Sicotrans^{®}.

The colored absorption pigment (b) is preferably transparent.

Additionally, an opaque colored absorption pigment may be used in small amounts for special effects, generally in an amount less than 10% by weight, preferably less than 5% by weight, based on the weight of all pigments in the composition.

The pigments used herein are preferably present in finely dispersed form. Typically, the organic pigments have an average primary particle size of 200 nm or less, preferably about 80 to 200 nm. The inorganic pigments typically have an average particle size of 200 nm or less, preferably about 80 to 200 nm.

The average particle size may be determined according to DIN ISO 13320:2009. "Average particle size" in this context refers to the d₅₀-value in the cumulative frequency distribution of the volume-averaged size distribution function (median diameter, particle size distribution), which indicates that 50% of the effect pigments have a diameter which is the same as or smaller than the respectively indicated value.

Effect pigment (c) may be a metal pigment such as aluminum flakes or an effect pigment based on transparent substrates, like natural mica, synthetic mica or glass flakes. The transparent substrates are typically coated with one or more layers of metal oxides like TiO₂, TiO₂ (doped with SnO₂), SiO₂ and/or Fe₂O₃. Preferred are pigments which reflect due to interference and absorption phenomena of thin films golden to red light. The metallic blue-shade red gloss of the opaque blue-shade red effect pigment of the invention can thus be modified with semitransparent pigments in a similar color. The coloristic effect is enrichment of a (two-dimensional) metallic gloss with so-called deepness in a third dimension.

Suitable effect pigments (c) are, for example, commercially available under the trademark Lumina^{®} or Mearlin^{®}.

The weight ratio of the blue-shade red effect pigment (a) to pigment (b) and optional pigment (c) may be varied in a wide range.

In a further aspect, the invention relates to a pigment formulation comprising:
(a) a blue-shade red effect pigment comprising Intermediate 1 and 2 (optionally surface treated);
(b) a colored absorption pigment; an
(c) optionally a further effect pigment;
wherein the weight ratio of the blue-shade red effect pigment (a) to the other pigments (b+c) is of from 95:5 to 5:95, preferably 80:20 to 5:95, more preferably 75:25 to 20:80.

The weight ratio of pigment (b) and pigment (c) may be of from 100:0 to 50:50, preferably 75:25 to 60:40.

Preferably, pigment (b) is a transparent pigment, especially selected from the group consisting of an organic pigment, an inorganic pigment and a mixture thereof.

In particular, the organic pigment is a yellow or red-hued organic pigment, for example, a yellow, red or orange organic pigment selected from an anthraquinone, diketopyrrolopyrrole, isoindolinone, metal complex, perinone, perylene, indigo pigment or any mixture thereof, including a solid solution or a mixed crystal.

The inorganic pigment may be a transparent red iron oxide pigment (C.I. Pigment Red 101).

Pigment (c) may be an effect pigment selected from metal pigments, or effect pigments based on a transparent substrate selected from natural mica, synthetic mica or glass. Preferably, pigment (c) comprises a platelet-shaped substrate selected from natural mica, synthetic mica or glass, which is coated with one or more layers of metal oxides selected from TiO₂, TiO₂ (doped with SnO₂), SiO₂ and/or Fe₂O₃.

Metal pigments may be aluminum-based platelets, preferably aluminum platelets.

The blue-shade red effect pigment may be incorporated into the application system in a customary manner, for example as a slurry or paste.

Accordingly, the present invention provides a composition comprising the blue-shade red effect pigment.

The pigment combination may be incorporated into the application system in a customary manner. The blue-shade red effect pigment, as defined herein-before, may be added as a slurry as well as the optional effect pigment (c). Usually, pigment (b) is added in a predispersed state.

### Applications of the effect pigment or pigment combination

The present effect pigment or the present pigment combination is suitable for all pigment end-use applications, especially coloring organic or inorganic materials of natural and synthetic origin, for example:
a) for mass coloring polymers, e.g. in the form of resins, rubber or plastics including films and fibers;
b) for the preparation of paints, paint systems, coating compositions, for example, in automotive, architectural and industrial coating compositions;
c) printing inks, e.g., digital printing like ink-jet printing, as well as for toners in electrophotography, e.g. for laser printers;
d) as an additive to colorants, such as pigments and dyes;
e) cosmetic preparations;
and the like.

Paints are aqueous or solvent-borne coating materials, in which the instant pigment combination may be employed. Organic film-forming binders that may be used include all of the binders that are usual in the coatings sector. Examples of binder materials which may be colored with the pigment combination of the invention include more particularly: oil-based materials (based on linseed oil or polyurethane oils);
cellulose-based materials (NC, CAB, CAP);
materials based on chlorinated rubber;
vinyl materials (based on PVC, PVDF, VC copolymer, polyvinyl acetate, polyvinyl ester dispersion, polyvinyl alcohol, polyvinyl acetal, polyvinyl ether, polystyrene, styrene copolymers);
acrylic materials;
alkyd materials;
saturated polyester materials;
unsaturated polyester materials;
polyurethane materials (one pack, two pack);
epoxy materials;
silicone materials.

The systems are described in detail in D. Stoye, W. Freitag, Paints, Coatings and Solvents, Second Edition, 1998, Wiley-VCH.

Preferably, the present effect pigment or the present pigment combination is used in waterborne and solvent-borne coating applications, more preferably in decorative coating compositions like architectural, automotive or industrial coating compositions, for example for any consumer goods.

The present effect pigment or the present pigment combination is generally incorporated into their respective application media in a customary way. An article may then be coated with these application media thus pigmented. Said article may be, for example, a vehicle body, an industrial equipment, an architectural facing element, etc.

**In** the case of plastics, the present effect pigment or the present pigment combination may also be incorporated for coloring into the application medium in the mass. The articles comprise the present effect pigment or the present pigment combination.

Suitable compositions for the cosmetic preparations into which the blue-shade red effect pigment may be introduced are known in the art. The formulations of cosmetics using the blue-shade red effect pigment of the invention is accomplished by measures and methods familiar to the skilled person. The blue-shade red effect pigments may be suitably used, for example, in nail varnishes.

The present blue-shade red effect pigment or the present pigment combination may be used in an appropriate amount dependent on the application. It may range of from 0.01 to 30% by weight, preferably 0.01 to 15% by weight, based on the total weight of the material to be colored in the wet state.

In a further aspect, the invention relates to the use of the blue-shade red effect pigment or the pigment combination as defined in any aspect herein for coloring or pigmenting coating compositions such as a paint, a printing ink, a varnish, plastics, a fiber, a film or a cosmetic preparation, preferably an automotive, an architectural or an industrial coating composition. In particular, the blue-shade red effect pigment or the pigment combination is used as a colorant for an automotive OEM or refinish coating composition.

In a further aspect, the invention relates to an article coated with a composition comprising a blue-shade red effect pigment or a pigment combination, as defined in any aspect.

Any material of the article may be coated with the composition comprising the blue-shade red effect pigment or the present pigment combination, including such materials as glass, ceramics, plastics, smooth-surfaced composites and metallic substrates. Especially, the composition is particularly adapted for metallic articles or plastic articles. The article may be bare substrate material or, in the case of metal substrates, may be pretreated to impart corrosion resistance as by phosphatizing, or electrocoating like cathodic dip coating, or other similar treatments well known in the art.

A coating comprising the present effect pigment or the present pigment combination is especially suitable for a multilayer coating used in the automotive industry. The blue-shade red effect pigment or the present pigment combination is usually incorporated into the basecoat layer of a basecoat/clearcoat coating system, as known in the art.

Accordingly, the invention relates to an automotive coating, which is colored or pigmented with a blue-shade red effect pigment or a pigment combination, as defined in any aspect herein.

The blue-shade red effect pigment of the invention exhibits excellent coloristic properties, in particular significantly higher chroma compared to blue-shade red effect pigments of the prior art, while the hiding power may be retained. The blue-shade red effect is highly chromatic with superior sparkle effect.

The strongly increased chroma is mainly observed at -15°, 15°, and 25°, the so-called face angle.

Further, the pigment combination of the invention exhibits excellent coloristic properties, in particular chroma. The admixture of a colored absorption pigment (b), especially of a red to violet color tone or a blue color tone, and optionally a further effect pigment to the blue-shade red effect pigment (a) enables a coating having superior coloristic properties compared to a similar pigment combination with a blue-shade red effect pigment known in the prior art. The coatings are more brilliant expressed by a combination of a higher chroma and optionally higher lightness, while the hiding power may be retained.

Including further effect pigments (c) which reflect due to interference and absorption phenomena of thin films blue-shade red to red light, the metallic blue-shade red gloss of the opaque blue-shade red effect pigment of the invention can thus be modified with semitransparent pigments (c) in a similar color. The coloristic effect is enrichment of a (two-dimensional) metallic gloss with so-called deepness in a third dimension.

Further, the performance characteristics such as weatherfastness and lightfastness needed for exterior use coatings are not adversely affected.

The definitions and preferences given for the pigment mentioned herein apply in any combination as well as in any combination for the other aspects of the invention.

The present invention will now be explained in more detail with reference to the following examples. These examples should not be construed as limited. Unless otherwise stated, "%" is always % by weight (wt%).

### Application testing

In order to determine the CIELAB values of hue h [°], chroma C* and lightness L*, the dried and cured coating films obtained (in masstone) are applied and measured as follows: the pigment(s) is/are incorporated (as a 50:50 slurry of pigment(s) in a solvent which is part of the varnish) by stirring with a level of total pigmentation of 5 wt% (based on the total weight of the wet varnish) into a conventional solvent-borne, medium solids cellulose acetobutyrate (CAB) / polyester varnish (pigment/binder 20/100), until the pigments are dispersed. The completed varnish is applied by pneumatic spray application onto aluminum panels with a wet film thickness of about 150 to 160 µm and subsequently dried at room temperature. After drying, the basecoat is overcoated by a 1K overcoat¹, dried and cured at 135°C. After curing, the basecoat is of about 20 µm and the clearcoat is of about 40 µm. The color data is determined using a multi-angle colorimeter BYK-MAC (from BYK Gardner) with a constant incident angle of 45° and D65 illuminant. The values C*, L*, a*, b* and h are measured at 15°, -15° (relative to the specular angle) and in higher angles of 25°, 45°, 75° and 110°.

¹In the present application an OEM urethane acrylate was used, however any suitable 1K or 2K overcoat could be used to test the examples. Typically, 1K (1 component) overcoats are baked at higher temnperatures (130°C) whereas 2K (2 component) overcoats are used for temerature sensitive application (e.g. car repair and refinishing) and harden at room temperature. Typical chemistry for 2K may be polyacrylate / polyurethane.

Quantitative determination of the angle dependent sparkling behavior:
The sparkling effects of the pigments of the examples are measured using a Byk-mac device from Byk-Gardner GmbH (LausitzerStraBe 8, 82538 Geretsried, Germany). This device is used to measure sparkle and graininess for flake characterization. Accordingly, the sparkling behavior of the Examples are characterized for three different illumination angles (direct illumination: 15°, 45° and 75° from perpendicular; camera detection: 0°) with the following parameters:
Sparkling area (Sa) corresponds to the number of light reflections within the measuring given;
Sparkling intensity (Si) corresponds the intensity of the light reflections;
Total Sparkle SG is calculated by the BykMac software based on Sa and Si.

Under diffuse light no sparkling effect can be observed. The visual appearance of sparkling pigments under diffuse light conditions is described as texture, coarseness or graininess. The Byk-mac determines the graininess value G to describe that effect.

The Flop index is calculated according to the following formula (A.B.J. Rodriguez (DuPont) published in JOCCA 1992(4), S.150-153) $Flop Index = \frac{2.69 {\left({L *}_{15 °}-{L *}_{110 °}\right)}^{1.11}}{{\left({L *}_{45 °}\right)}^{0.86}}$

The present invention has been described in detail, including the preferred embodiments thereof. However, it will be appreciated that those skilled in the art, upon consideration of the present disclosure, may make modifications and/or improvements on this invention that fall within the scope of the appended claims.

### Examples

### Example 1

### Synthesis of Intermediate 1: Al-silver dollar with d50 = 18µm coated with SiO₂ and Fe₂O₃ - showing a mid-shade red color.

Aluminum paste (140 g dry powder) with a surface area of 2 - 3 m²/g and a particle size of d50 = 17 - 23 µm is suspended in 1300 - 1600 mL ethanol. SiO₂-passivation takes place according to the method described in Example 1 US 5,607,504 or EP-A-0708154 or JP-A-54081337. The obtained suspension of passivated aluminum, ethanol, ammonia, water, and non-hydrolized/partially hydrolyzed tetraethoxysilane is filtered, and washed with 1500 mL ethanol in total. The received paste has a solids concentration of 50 to 60 % and the dry pigment has an Al to SiO₂ ratio of about 4 : 1.

The SiO₂-coated aluminum paste (75g of dry powder) is dispersed in 700 mL of demineralized water and the stirred slurry is heated to 78°C. The pH value is set to 5 with 10 wt.-% HNO₃, adjusted to 3.1 with a solution of 0.2 - 0.3 g Al₂(SO₄)₃ · 16 H₂O in 30 mL of demineralized water, and kept at 2.8 with 10 g 12.5% NH₃ first and then with 25 wt.-% KOH during the addition of Fe(NO₃)₃ solution with an Fe weight concentration of 6 - 9 % until the desired red color is achieved. Typical dosing times are in the range of 12 - 25 h and the final pigment has an Al : SiO₂ : Fe₂O₃ content of about 4 : 1 : 7. The slurry is filtered, washed with demineralized water until conductivity level of e.g. 200 µS is achieved and ethanol and the press cake is dried over vacuum and kept as alcoholic paste with a solid concentration of 60 to 80 % to be used in next step.

The obtained pigment paste (60g of dry powder) is dispersed in 730-750 g of isoparaffin fluid. The reaction mixture is heated up to 220°C in 10 h and stirred at 220°C for 6 hours under nitrogen atmosphere. The slurry is filtered, washed with ethanol and the press cake is dried over vacuum for further 5 minutes at room temperature. The received paste has a solid concentration of about 70%.

The resulting product - a paste of intermediate 1 in iso paraffin - showed a mid-shade red, high brilliant color.

### Synthesis of Intermediate 2: synthetic mica with d50 = 20µm coated with Fe₂O₃, SiO₂ and TiO₂ showing a purple color.

A 6.5% aqueous slurry containing 130 g synthetic mica flakes (d50 approximately 20 µm) was heated to 82°C and stirred. The pH of the slurry was adjusted to 3.0 with HCl. Then, 600 grams of 39% FeCl₃·5H₂O were added at 2 g/min while the pH was maintained with a NaOH solution. Calcination of a pigment sample resulted in a hue of 20°. At the desired shade, the pH of the slurry was raised to 7.8 with NaOH and 600 g of 20% Na₂SiO₃x5H₂O were added at 2 g/min while the pH was maintained at 7.80 by the addition of an HCl solution. After the addition of the 20% Na₂SiO₃x5H₂O was complete, the pH of the slurry was adjusted to 1.5 with HCl. Then, 20 g of 20% SnCl₄ 5H₂O were added at 1.5 g/min while the pH was maintained with the addition of NaOH solution. The slurry was stirred, followed by the addition of 800 g 40% TiCl₄ at 2 g/min while the pH was maintained at 1.50 by the addition of NaOH solution. Next, 50 mL of the slurry was filtered, and the presscake was washed with water and calcined at 850°C for 20 minutes. The resulting product showed a purple color.

### Surface treatment of a blend of Intermediate 1 / Intermediate 2 with a weight ratio of 85/15 related to dry forms of pigments.

95 g of a blend consisting of 85 pts Intermediate 1 and 15 pts intermediate 2 are dispersed in 310 ml of isopropanol and the dispersion is heated to the boiling point. Then 9 g of tetraethoxysilane are added and, a short time later, 9 g of H₂O. Subsequently a 25% strength aqueous NH₄OH solution is introduced via an automatic metering unit over a period of 3 h at a rate such that, during this time, a pH of 8.7 is attained and maintained. 1 h after the beginning of this metered addition, solution A (see below) is also metered in continuously using a laboratory automatic metering unit (STEPDOS from IKA) over a period of 85 min. 5 min after the beginning of this feed, the polymerization is initiated by adding a spatula tip of 2,2'-azobis(isobutyronitrile) (AIBN). The reaction mixture is then left with stirring at 88° C. for 4 h. Subsequently a mixture of 0.8 g of Dynasylan OCTEO (octyltriethoxysilane) and 0.5 g of Dynasylan AMMO (3-aminopropyltrimethoxysilane) is added. The reaction mixture is stirred overnight and filtered the next day. The filtercake is dried in a vacuum drying cabinet at 100° C. for 6 h.

(Solution A: 0.59 g of Dynasylan MEMO (3-methacryloxypropyltrimethoxysilane) and 2.51 g of trimethylolpropane trimethacrylate (TMPTMA) in solution in 116 ml of ethanol).

The resulting Example 1 blue-shade red effect pigment in full shade (masstone) compared to the reference Paliocrom Sparkling Red L 3505 showed similar hue, higher chroma, higher lightness, improved hiding, lower graininess, more pronounced Flop index and better DOI (Table 1).

### Example 2

### Synthesis of Intermediate 1: Al-silver dollar with d50= 18µm coated with SiO₂ and Fe₂O₃ - showing a mid- shade red color.

Aluminum paste (140 g dry powder) with a surface of 2 - 3 m²/g and a particle size of d50 = 17 - 23 µm is suspended in 1300 - 1600 mL ethanol. SiO₂-passivation takes place according to the method described in Example 1 US 5,607,504 or EP-A-0708154 or JP-A-54081337. The obtained suspension of passivated aluminum, ethanol, ammonia, water, and non-hydrolized/partially hydrolyzed tetraethoxysilane is filtered, and washed with 1500 mL ethanol in total. The received paste has a solids concentration of 50 to 60 % and the dry pigment has an Al to SiO₂ ratio of about 4 : 1.

The SiO₂-coated aluminum paste (75 g of dry powder) is dispersed in 700 mL of demineralized water and the stirred slurry is heated to 78 °C. The pH value is set to 3.35 with 10 wt.-% HNO₃, adjusted to 3.1 with a solution of 0.2 - 0.3 g Al₂(SO₄)₃ · 16 H₂O in 30 mL of demineralized water, and kept at 2.8 with 25 wt.-% NaOH during the addition of Fe(NO₃)₃ solution with an Fe weight concentration of 6 - 9 % until the desired red color is achieved. Typical dosing times are in the range of 12 - 25 h and the final pigment has an Al : SiO₂ : Fe₂O₃ content of about 4 : 1 : 7. The slurry is filtered, washed with demineralized water until conductivity level of e.g. 200 µS is achieved and ethanol and the press cake is dried over vacuum and kept as alcoholic paste with a solid concentration of 60 to 80 % to be used in next step.

The obtained pigment paste (60 g of dry powder) is dispersed in 730 - 750 g of isoparaffin fluid. The reaction mixture is heated up to 195 °C in 10 h and stirred at 195 °C for 6 hours under nitrogen atmosphere. The slurry is filtered, washed with ethanol and the press cake is dried over vacuum for further 5 minutes at room temperature. The received paste has a solid concentration of about 60-80 %.

The resulting product showed a yellow-shaded red, high brilliant color.

**Synthesis of Intermediate 2:** same as intermediate 2 of Example 1.

**Surface treatment of a blend of Intermediate 1 / Intermediate 2 with a weight ratio of 85/15 related to dry forms of pigments:** Same as surface treatment of Example 1.

The resulting Example 2 blue-shade red effect pigment compared to the reference Paliocrom Sparkling Red L 3505 is slightly reddish, higher in chroma and lightness, better in sparkle and hiding, with more pronounced Flop index and better DOI (Table 1).

### Example 3

### Synthesis of Intermediate 1: Al-silver dollar with d50= 18µm coated with SiO₂ and Fe₂O₃ - showing a mid- shade red color

Same procedure as intermediate 1 of Example 2. The obtained pigment paste (60 g of dry powder) is dispersed in 730 - 750 g of isoparaffin fluid. The reaction mixture is heated up to 195 - 220 °C in 10 h and stirred at 195 - 220 °C for 6 hours under nitrogen atmosphere. The slurry is filtered, washed with ethanol and the press cake is dried over vacuum for further 5 minutes at room temperature. The received paste has a solid concentration of about 70 %.

**Synthesis of Intermediate 2:** Same as intermediate 2 of Example 1 (synthetic mica with d50 = 20µm coated with Fe₂O₃, SiO₂ and TiO₂ showing a purple color).

### Surface treatment of a blend of Intermediate 1 / Intermediate 2 with a weight ratio of 80/20 related to dry forms of pigments

80 g of intermediate 1 and 20 g of intermediate 2 were dispersed in 1-liter demineralized water and heated to 75°C. The pH was adjusted to 3 with dilute nitric acid and 2 g of 20.2% Ce(NO₃)₃ solution, 7 g of a 4.3% Al(NO₃)₃ solution and 0.48 g NaH₂PO₂.H₂O were added to the slurry and stirred approximately 20 minutes. The slurry is slowly raised to pH 8 with 3.5% NaOH over a period of 30 minutes. 3 g of 3-glycidoxypropyl trimethoxy silane and 3g 3-aminopropyl triethoxy silane were added over a period of 10 minutes. Stirring continues for 2 hours at 75°C. The slurry was filtered, washed and dried at 140°C

The resulting Example 3 blue-shade red effect pigment as compared to the reference Paliocrom Sparkling Red L 3505 is similar in shade chroma and lightness, but better in flopindex, sparkle, graininess, hiding and DOI (Table 1).

### Example 4

Same raw materials as Example 3. Dosage of Fe₂O₃-precursor stopped later.

**Synthesis of intermediate 1:** Aluminum paste (140 g dry powder) with a surface of 2 - 4 m²/g and a particle size of d50 = 15 - 21 µm is suspended in 1570 mL ethanol. SiO₂-passivation takes place according to the method described in Example 1 US 5,607,504 or EP-A-0708154 or JP-A-54081337. The obtained suspension of passivated aluminum, ethanol, ammonia, water, and non-hydrolized/partially hydrolyzed tetraethoxysilane is filtered, and washed with 1250 mL ethanol in total. The received paste has a solids concentration of 50 to 60 % and the dry pigment has an Al to SiO₂ ratio of about 4 : 1.

The SiO₂-coated aluminum paste (75 g of dry powder) is dispersed in about 700 mL of demineralized water and the stirred slurry is heated to 78 °C. The pH value is set to 3.35 with 10 wt.-% HNO₃, adjusted to 3.1 with a solution of 0.2 - 0.4 g Al₂(SO₄)₃ · 16 H₂O in 30 mL of demineralized water, and kept at 2.8 with 25 wt.-% NaOH during the addition of Fe(NO₃)₃ solution with an Fe weight concentration of 6 - 9 % until the desired red color is achieved. However the dosage of Fe(NO₃)₃ solution was stopped compared to intermediate 1 of example 3 about 15 minutes later in order to get a slightly more bluish intermediate 1. Typical dosing times are in the range of 12 - 25 h and the final pigment has an Al : SiO₂ : Fe₂O₃ content of about 4 : 1 : 7. The slurry is filtered, washed with demineralized water until conductivity level of e.g. 200 µS is achieved and ethanol and the press cake is dried over vacuum and kept as alcoholic paste with a solid concentration of 60 to 80 % to be used in next step.

The obtained pigment paste (60 g of dry powder) is dispersed in 730 - 750 g of isoparaffin fluid. The reaction mixture is heated up to 195 - 220 °C in 10 h and stirred at 195 - 220 °C for 6 hours under nitrogen atmosphere. The slurry is filtered, washed with ethanol and the press cake is dried over vacuum for further 5 minutes at room temperature. The received paste has a solid concentration of about 70 %.

**Intermediate 2** was synthesized as described in Example 3.

Surface treatment of the 80/20 blend of Intermediate 1 and 2 was done as described in Example 3.

The resulting Example 4 blue-shade red effect pigment as compared to the reference Paliocrom Sparkling Red L 3505 is better in chroma, flopindex, sparkle, graininess, hiding and DOI (Table 1).

### Example 5

### Synthesis of Intermediate 1: Al-silver dollar with d50 = 18µm coated with SiO₂ and Fe₂O₃ - showing a mid- shade red color

Intermediate 1 was synthesized as described in Example 2. The dosage of Fe(NO₃)₃ solution was stopped compared to intermediate 1 of example 2 about 15 minutes later in order to get a slightly more bluish product

### Synthesis of Intermediate 2 (natural mica with d50 = 18µm coated with TiO₂, SiO₂ and TiO₂ showing a magenta interference color)

A 6.5% aqueous slurry containing 130 g of mica flakes (avg. particle size about 18 µm) was heated to 82°C and stirred. The pH of the slurry was adjusted to 1.6 with 28% HCl. Then, 15 g of 20% SnCl₄ ·5H₂O were added at a rate of 2.0 g/min while the pH was maintained at 1.60 by the addition of 10% NaOH. The slurry was allowed to stir for 30 minutes. 40% TiCl₄ was then added at a rate of 2.0 g/min while the pH was maintained at 1.50 by the addition of 35% NaOH. At the desired pearl shade, the pH of the slurry was raised to 7.8 with 35% NaOH. Then, 150 g of 20% Na₂SiO₃·5H₂O were added at a rate of 2.0 g/min while the pH was maintained at 7.80 by the addition of 28% HCl. After the addition of the 20% Na₂SiO₃·5H₂O was complete, the pH of the slurry was adjusted to 1.7 with 28% HCl. Then, 28 g of 20% SnCl₄·5H₂O were added at a rate of 2.0 g/min while the pH was maintained at 1.70 by addition of 10% NaOH. The slurry was allowed to stir for 30 minutes. 40% TiCl₄ was then added at a rate of 2.0 g/min while the pH was maintained at 1.50 by the addition of 35% NaOH.

At the desired shade the slurry was filtered, and the presscake was washed with water and calcined at 850°C for 20 minutes. The resulting interference color was an intense magenta shade.

Intermediate 1 / Intermediate 2 were blended in a propylene glycol slurry.

85 g of intermediate 1 (related to dry pigment) and 15 g of dry intermediate 2 were stirred in 1 litre of propylene glycol. After a stirring time of 30 minutes filtration was done. The resulting paste had a solid content of 65 % pigment.

The resulting Example 5 pigment had the same shade as the comparison, but chroma, lightness and flop index were strongly improved. DOI , hiding and sparkle was also improved (Table 1).

### Example 6

### Synthesis of Intermediate 1: Al-silver dollar with d50= 18µm coated with SiO₂ and Fe₂O₃ - showing a mid- shade red color

Intermediate 1 was synthesized as described in intermediate 1 Example 2. The dosage of Fe(NO₃)₃ solution was stopped compared to intermediate 1 of Example 2 about 15 minutes later in order to get a slightly more bluish product.

### Synthesis of Intermediate 2 (natural mica with d50 = 18µm coated with TiO₂, SiO₂ and TiO₂ showing an indigo interference color)

A 6.5% aqueous slurry containing 130 g of mica flakes (avg. particle size about 18 µm) was heated to 82°C and stirred. The pH of the slurry was adjusted to 1.6 with 28% HCl. Then, 15 g of 20% SnCl₄ ·5H₂O were added at a rate of 2.0 g/min while the pH was maintained at 1.60 by the addition of 10% NaOH. The slurry was allowed to stir for 30 minutes. 40% TiCl₄ was then added at a rate of 2.0 g/min while the pH was maintained at 1.50 by the addition of 35% NaOH. At the desired pearl shade, the pH of the slurry was raised to 7.8 with 35% NaOH. Then, 412 g of 20% Na₂SiO₃ ·5H₂O were added at a rate of 2.0 g/min while the pH was maintained at 7.80 by the addition of 28% HCl. After the addition of the 20% Na₂SiO₃ ·5H₂O was complete, the pH of the slurry was adjusted to 1.7 with 28% HCl. Then, 28 g of 20% SnCl₄ ·5H₂O were added at a rate of 2.0 g/min while the pH was maintained at 1.70 by addition of 10% NaOH. The slurry was allowed to stir for 30 minutes. 40% TiCl₄ was then added at a rate of 2.0 g/min while the pH was maintained at 1.50 by the addition of 35% NaOH.

At the desired shade the slurry was filtered, and the presscake was washed with water and calcined at 850°C for 20 minutes. The resulting interference color was a brilliant indigo shade.

Intermediate 1 / Intermediate 2 were surface treated separately and then blended in a propylene glycol slurry.

100 g of intermediate 1 (related to dry pigment) were dispersed in 310 ml of isopropanol and the dispersion is heated to the boiling point. Then 9 g of tetraethoxysilane are added and, a short time later, 9 g of H₂O. Subsequently a 25% strength aqueous NH₄OH solution is introduced via an automatic metering unit over a period of 3 h at a rate such that, during this time, a pH of 8.7 is attained and maintained. 1 h after the beginning of this metered addition, solution A (see below) is also metered in continuously using a laboratory automatic metering unit (STEPDOS from IKA) over a period of 85 min. 5 min after the beginning of this feed, the polymerization is initiated by adding a spatula tip of 2,2'-azobis(isobutyronitrile) (AIBN). The reaction mixture is then left with stirring at 88° C for 4 h. Subsequently a mixture of 0.8 g of Dynasylan OCTEO (octyltriethoxysilane) and 0.5 g of Dynasylan AMMO (3-aminopropyltrimethoxysilane) is added. The reaction mixture is stirred overnight and filtered the next day. The filtercake is dried in a vacuum drying cabinet at 100° C. for 6 h. (Solution A: 0.59 g of Dynasylan MEMO (3-methacryloxypropyltrimethoxysilane) and 2.51 g of trimethylolpropane trimethacrylate (TMPTMA) in solution in 116 ml of ethanol).

100 g of intermediate 2 were dispersed in 1-liter demineralized water and heated to 75°C. The pH was adjusted to 3 with dilute nitric acid and 2 g of 20.2% Ce(NO₃)₃ solution, 7 g of a 4.3% Al(NO₃)₃ solution and 0.48 g NaH₂PO₂.H₂O were added to the slurry and stirred approximately 20 minutes. The slurry is slowly raised to pH 8 with 3.5% NaOH over a period of 30 minutes. 3 g of 3-glycidoxypropyl trimethoxy silane and 3g 3-aminopropyl triethoxy silane were added over a period of 10 minutes. Stirring continues for 2 hours at 75°C. The slurry was filtered, washed and dried at 140°C.

Finally 86 g of separately surface treated intermediate 1 and 14 g of separately surface treated intermediate 2 were dispersed in 1 litre of iso-prOH followed by filtration. The resulting Example 6 paste had a solid content of 65 %. The bluish red pigment as compared to the reference is more chromatic, lighter and showed better flop index, DOI, sparkle and hiding (Table 1).

### Example 7

### Synthesis of Intermediate 1: Al-Silver dollar with d50 = 18µm coated with SiO₂ and Fe₂O₃ - showing a mid- shade red color

Procedure according to intermediate 1 in Example 2. The dosage of Fe(NO₃)₃ solution was stopped compared to intermediate 1 of Example 2 about 15 minutes later in order to get a slightly more bluish product.

### Synthesis of Intermediate 2: (natural mica with d50 = 18µm coated with TiO₂, SiO₂ and TiO₂ showing a blue interference color)

A 6.5% aqueous slurry containing 130 g of mica flakes (avg. particle size about 18 µm) was heated to 82°C and stirred. The pH of the slurry was adjusted to 1.6 with 28% HCl. Then, 15 g of 20% SnCl₄ ·5H₂O were added at a rate of 2.0 g/min while the pH was maintained at 1.60 by the addition of 10% NaOH. The slurry was allowed to stir for 30 minutes. 40% TiCl₄ was then added at a rate of 2.0 g/min while the pH was maintained at 1.50 by the addition of 35% NaOH. At the desired pearl shade, the pH of the slurry was raised to 7.8 with 35% NaOH. Then, 550 g of 20% Na₂SiO₃ ·5H₂O were added at a rate of 2.0 g/min while the pH was maintained at 7.80 by the addition of 28% HCl. After the addition of the 20% Na₂SiO₃·5H₂O was complete, the pH of the slurry was adjusted to 1.7 with 28% HCl. Then, 28 g of 20% SnCl₄ ·5H₂O were added at a rate of 2.0 g/min while the pH was maintained at 1.70 by addition of 10% NaOH. The slurry was allowed to stir for 30 minutes. 40% TiCl₄ was then added at a rate of 2.0 g/min while the pH was maintained at 1.50 by the addition of 35% NaOH.

At the desired shade the slurry was filtered, and the presscake was washed with water and calcined at 850°C for 20 minutes. The resulting interference color was a brilliant reddish-blue shade.

Surface treatment of a blend of Intermediate 1 / Intermediate 2 in a ratio of 91:9. The surface treatment of the 91:9 blend is analogous to the surface treatment of the blend in example 1. The 91:9 blend was related to dry pigment.

The resulting Example 7 blue-shade red effect pigment as compared to the reference Paliocrom Sparkling Red L 3505 is slightly reddish, higher in chroma and lightness, better in sparkle and hiding, with more pronounced Flop index and better DOI (Table 1).

### Example 8

### Synthesis of Intermediate 1: (Al-Silver dollar with d50 = 18µm coated with SiO₂ and Fe₂O₃ - showing a mid- shade red color)

Procedure according to intermediate 1 in Example 2. The dosage of Fe(NO₃)₃ solution was stopped compared to intermediate 1 of example 2 about 15 minutes later in order to get a slightly more bluish product.

### Synthesis of Intermediate 2: (synthetic mica with d50 = 20µm coated with TiO₂, SiO₂ and TiO₂ showing a blue interference color)

A 6.5% aqueous slurry containing 130 g of synthetic mica flakes (avg. particle size about 20 µm) was heated to 82°C and stirred. The pH of the slurry was adjusted to 1.6 with 28% HCl. Then, 15 g of 20% SnCl₄ ·5H₂O were added at a rate of 2.0 g/min while the pH was maintained at 1.60 by the addition of 10% NaOH. The slurry was allowed to stir for 30 minutes. 40% TiCl₄ was then added at a rate of 2.0 g/min while the pH was maintained at 1.50 by the addition of 35% NaOH. At the desired pearl shade, the pH of the slurry was raised to 7.8 with 35% NaOH. Then, 340 g of 20% Na₂SiO₃ .5H₂O were added at a rate of 2.0 g/min while the pH was maintained at 7.80 by the addition of 28% HCl. After the addition of the 20% Na₂SiO₃·5H₂O was complete, the pH of the slurry was adjusted to 1.7 with 28% HCl. Then, 28 g of 20% SnCl₄ ·5H₂O were added at a rate of 2.0 g/min while the pH was maintained at 1.70 by addition of 10% NaOH. The slurry was allowed to stir for 30 minutes. 40% TiCl₄ was then added at a rate of 2.0 g/min while the pH was maintained at 1.50 by the addition of 35% NaOH.

At the desired shade the slurry was filtered, and the presscake was washed with water, dried and calcined at 850°C for 20 minutes. The resulting interference color was a brilliant blue shade.

Intermediate 1 / Intermediate 2 were surface treated in a 92/8 blend. The surface treatment of the 92:8 blend is analogous to the surface treatment of the blend in Example 1. The 92:8 blend was related to dry pigment.

The resulting Example 8 blue-shade red effect pigment as compared to the reference Paliocrom Sparkling Red L 3505 is slightly reddish, higher in chroma and lightness, better in sparkle and hiding, with more pronounced Flop index and better DOI (Table 1).

### Example 9

### Synthesis of Intermediate 1: Al-silver dollar with d50= 18µm coated with SiO₂ and Fe₂O₃ - showing a mid- shade red color

Procedure according to intermediate 1 in Example 2. The dosage of Fe(NO₃)₃ solution was stopped compared to intermediate 1 of example 2 about 15 minutes later in order to get a slightly more bluish product.

### Synthesis of Intermediate 2: (synthetic mica with d50 = 20µm coated with Fe₂O₃, SiO₂ and TiO₂ showing a purple color)

The synthesis was already described under intermediate 2 of Example 1.

Surface treatment of a blend of Intermediate 1 / Intermediate 2 was done as described in Example 3 but with a weight ratio of 86/14 related to dry forms of pigments.

The resulting Example 9 blue-shade red effect pigment as compared to the reference Paliocrom Sparkling Red L 3505 is similar in shade chroma and lightness, but better in flopindex, sparkle, hiding and DOI (Table 1).

### Example 10

### Synthesis of Intermediate 1: Al-silver dollar with d50= 18µm coated with SiO₂ and Fe₂O₃ - showing a mid- shade red color

Procedure according to intermediate 1 in Example 2. The dosage of Fe(NO₃)₃ solution was stopped compared to intermediate 1 of example 2 about 15 minutes later in order to get a slightly more bluish product

### Synthesis of Intermediate 2: (synthetic mica with d50 = 20µm coated with Fe₂O₃, SiO₂ and TiO₂ showing a bluish russet color)

A 6.5% aqueous slurry containing 130 g synthetic mica flakes (d50 approximately 20 µ 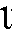 η) was heated to 82°C and stirred. The pH of the slurry was adjusted to 3.0 with HCl. Then, 600 grams of 39% FeCl₃ 5H₂O were added at 2 g/min while the pH was maintained with a NaOH solution. Calcination of a pigment sample resulted in a hue of 20°. At the desired shade, the pH of the slurry was raised to 7.8 with NaOH and 600 g of 20% Na₂Si0₃x5H₂O were added at 2 g/min while the pH was maintained at 7.80 by the addition of an HCl solution. After the addition of the 20% Na₂Si0₃x5H₂O was complete, the pH of the slurry was adjusted to 1.5 with HCl. Then, 20 g of 20% SnCl₄ 5H₂O were added at 1.5 g/min while the pH was maintained with the addition of NaOH solution. The slurry was stirred, followed by the addition of 800 g 40% TiCl₄ at 2 g/min while the pH was maintained at 1.50 by the addition of NaOH solution. Next, 50 mL of the slurry was filtered, and the presscake was washed with water and calcined at 850°C for 20 minutes. The resulting product showed a bluish russet color.

Intermediate 1 / Intermediate 2 were blended in 75:25 ratio (no surface treatment, dry powder) 75 g of intermediate 1 and 25 g of intermediate 2 are dispersed in 500 ml of isopropanol followed by filtration and drying at 70°C.

The resulting Example 10 dry powder of the blue-shade red effect pigment in full shade (masstone) compared to the reference Paliocrom Sparkling Red L 3505 shows similar hue, higher chroma, stronger sparkle and a more pronounced Flop index and much better DOI (Table 1).

### Example 11

### Synthesis of Intermediate 1: Al-silver dollar with d50= 18µm coated with SiO₂ and Fe₂O₃ - showing a mid- shade red color.

Procedure according to intermediate 1 in Example 2. The dosage of Fe(NO₃)₃ solution was stopped compared to intermediate 1 of example 2 about 15 minutes later in order to get a slightly more bluish product.

### Synthesis of Intermediate 2: (synthetic mica with d50 = 11µm coated with Fe₂O₃, SiO₂ and TiO₂ showing a bluish russet color)

A 6.5% aqueous slurry containing 130 g synthetic mica flakes (d50 approximately 11 µ 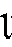 η) was heated to 82°C and stirred. The pH of the slurry was adjusted to 3.0 with HCl. Then, 600 grams of 39% FeCl₃ 5H₂O were added at 2 g/min while the pH was maintained with a NaOH solution. Calcination of a pigment sample resulted in a hue of 20°. At the desired shade, the pH of the slurry was raised to 7.8 with NaOH and 700 g of 20% Na₂Si0₃x5H₂O were added at 2 g/min while the pH was maintained at 7.80 by the addition of an HCl solution. After the addition of the 20% Na₂Si0₃x5H₂O was complete, the pH of the slurry was adjusted to 1.5 with HCl. Then, 25 g of 20% SnCl₄ 5H₂O were added at 1.5 g/min while the pH was maintained with the addition of NaOH solution. The slurry was stirred, followed by the addition of 900 g 40% TiCl₄ at 2 g/min while the pH was maintained at 1.50 by the addition of NaOH solution. Next, 50 mL of the slurry was filtered, and the presscake was washed with water and calcined at 850°C for 20 minutes. The resulting product showed a bluish russet color.

Intermediate 1 / Intermediate 2 were blended in 70/30 ratio (no surface treatment, dry powder). 70 g of Intermediate 1 and 30 g of intermediate 2 are dispersed in 500 ml of isopropanol followed by filtration and drying at 70°C.

The resulting Example 11 dry powder of the blue-shade red effect pigment in full shade (masstone) compared to the reference Paliocrom Sparkling Red L 3505 showed similar hue and higher chroma. Due to the use of a finer mica component the resulting pigment was of more smooth appearance with a less pronounced Flop index and much better DOI (Table 1).

**Table 1: Summary of application testing in mass tone.**

| Color data was measured at 15° on a BYK-mac spectrophotometer | | | | | | | | | | | | |
|---|---|---|---|---|---|---|---|---|---|---|---|---|
| | **CIELAB** | | | **illum. D65 10° spex(0,00) 15°** | | | | **S15°** | **diffuse** | | | |
| **Example** | **h** | **C*** | **L*** | **ΔH*** | **ΔC*** | **ΔL*** | **Flop Index** | **SG** | **G** | **DOI** | **Hiding (µ)** | **Performance Index^{l}** |
| Comparative² | 32.2 | 94.3 | 95.0 | | | | 17.9 | 3.3 | 3.7 | 66 | 37 | 260 |
| Example 1 | 31.6 | 103.4 | 98.1 | -1.0 | 9.1 | 3.1 | 23.5 | 3.7 | 3.6 | 72 | 33 | 522 |
| Example 2 | 37.8 | 103.3 | 101.2 | 9.7 | 9.0 | 6.2 | 22.0 | 4.0 | 4.3 | 71 | 33 | 467 |
| Example 3 | 31.2 | 93.3 | 95.0 | -1.5 | -1.0 | 0.0 | 21.0 | 3.7 | 3.6 | 73 | 31 | 442 |
| Example 4 | 28.6 | 95.4 | 93.6 | -5.8 | 1.1 | -1.5 | 20.6 | 3.5 | 3.4 | 76 | 33 | 446 |
| Example 5 | 33.1 | 102.9 | 97.6 | 1.5 | 8.6 | 2.5 | 22.9 | 3.5 | 3.3 | 73 | 35 | 497 |
| Example 6 | 33.3 | 103.1 | 97.4 | 2 | 8.8 | 2.4 | 22.7 | 3.5 | 3.4 | 71 | 35 | 471 |
| Example 7 | 34.1 | 102.8 | 98.4 | 3.3 | 8.5 | 3.4 | 23.1 | 3.5 | 3.4 | 71 | 31 | 546 |
| Example 8 | 33.5 | 101.3 | 98.5 | 2.3 | 7 | 3.4 | 23.2 | 3.6 | 3.4 | 70 | 30 | 556 |
| Example 9 | 33.3 | 103.1 | 96.4 | 2 | 8.8 | 1.3 | 23.1 | 3.8 | 3.6 | 70 | 32 | 525 |
| Example 10 | 32.0 | 101.0 | 92.9 | -0.2 | 6.6 | -2.1 | 22.2 | 3.9 | 3.7 | 75 | 36 | 462 |
| Example 11 | 31.2 | 97.6 | 93.2 | -1.7 | 3.3 | -1.9 | 21.0 | 3.9 | 3.5 | 74 | 35 | 450 |

| | | | | | | | | | | | | |
|---|---|---|---|---|---|---|---|---|---|---|---|---|
| ¹Performance Index (PI) is a composite measurement of overall coloristic properties calculated using the following formula (higher PI is better): $\frac{C * \times L * \times Flop \times SG}{G \times Hiding \times 1000}$ As can be seen in Table 1, the higher PI for all of the inventive examples indicates improved overall coloristic properties vs. the comparative example. ² The comparative example is Paliocrom Sparkling Red L 3505 pigment. | | | | | | | | | | | | |

## Claims

1. A blue-shade red effect pigment, comprising a blend of:
a. an Intermediate 1 comprising a metallic flake substrate coated with silica and iron oxide; and
b. an Intermediate 2 comprising synthetic or natural mica flakes coated with a first layer of Fe₂O₃ or TiO₂; a second layer of SiO₂; and a third layer of Fe₂O₃ or TiO₂; wherein the ratio of intermediate 1: intermediate 2 is in the range of 99:1 to 60:40, by mass based on the dry forms of the intermediates.

2. The pigment of claim 1, wherein the metallic flake substrate in Intermediate 1 is passivated, optionally wherein the metallic flake substrate is passivated with one or more layers of a material selected from the group consisting of metal phosphate, aluminum oxide, hydrated aluminum oxide and combinations thereof.

3. The pigment of any preceding claim, wherein Intermediate 1 and/or Intermediate 2 are surface-treated before blending with a material selected from the group consisting of silica, Al₂O₃, Ce-oxide; silanes or blends thereof to get a blue-shade red effect, preferably wherein Intermediate 1 and Intermediate 2 are both surface-treated before blending with a material selected from said group.

4. The pigment of any preceding claim wherein the metallic flake substrate comprises aluminum; and/or wherein the d50 median particle size of the metallic flake substrate and synthetic or natural mica flakes is 9-22 µm.

5. The pigment of any preceding claim, wherein Intermediate 2 comprises a silica layer having a geometric thickness from about 5 nm to about 300 nm, preferably about 10 nm to about 110 nm, optionally wherein the silica material layer has a refractive index of ≤ 1.8, or 1.30-1.80 or 1.30-1.50, or 1.40-1.50.

6. The pigment of any preceding claim, wherein the third layer of Intermediate 2 comprises TiO₂, preferably rutile and/or anatase titania having a geometric thickness of about 5 nm to about 400 nm, preferably about 15 nm to about 200 nm, optionally wherein the third layer of Intermediate 2 has a geometric thickness of about 5 nm to about 400 nm and a refractive index of >1.80 or 2.00-4.00, or 2.00-3.30, or 2.20-3.00, or 2.20-2.60.

7. The pigment of any preceding claim, wherein Intermediate 1 and/or Intermediate 2 are surface treated in an aqueous suspension with aluminum oxides and cerium oxides followed by a silane treatment.

8. The pigment of any preceding claim, wherein the ratio of intermediate 1 : intermediate 2 is in the range of 97:3 to 70:30, by mass based on the dry forms of the intermediates, optionally wherein the ratio of intermediate 1 : intermediate 2 is in the range of 80:20 to 70:30, by mass based on the dry forms of the intermediates.

9. The pigment of any preceding claim, wherein the substrate of intermediate 1 is coated with a silica layer having a geometric thickness of about 20 nm to about 100 nm and an iron oxide layer on top of the silica layer having a geometric thickness of about 120 nm to about 500 nm; or wherein the substrate of intermediate 1 is coated with a silica layer having a geometric thickness of about 50 nm to about 70 nm and an iron oxide layer on top of the silica layer having a geometric thickness of about 150 nm to about 350 nm.

10. The pigment of any preceding claim, wherein the substrate of intermediate 2 is coated with a first layer of Fe₂O₃ or TiO₂, wherein the first layer has a geometric thickness of from about 5 nm to about 150 nm and a second layer of silica having a geometric thickness of from about 5 nm to about 300 nm and a third layer of Fe₂O₃ or TiO₂, wherein the third layer has a geometric thickness of from about 5 nm to about 400 nm, optionally wherein the substrate of intermediate 2 is coated with a first layer of Fe₂O₃ or TiO₂, wherein the first layer has a geometric thickness of from about 15 nm to about 70 nm and a second layer of silica having a geometric thickness of from about 10 nm to about 110 nm and a third layer of Fe₂O₃ or TiO₂, wherein the third layer has a geometric thickness of from about 15 nm to about 200 nm.

11. The pigment of any one of claims 1-8, wherein the substrate of intermediate 1 is coated with a silica layer having a geometric thickness of about 20 nm to about 100 nm and an iron oxide layer on top of the silica layer having a geometric thickness of about 120 nm to about 500 nm and the substrate of intermediate 2 is coated with a first layer of Fe₂O₃ or TiO₂, wherein the first layer has a geometric thickness of from about 5 nm to about 150 nm and a second layer of silica having a geometric thickness of from about 5 nm to about 300 nm and a third layer of Fe₂O₃ or TiO₂, wherein the third layer has a geometric thickness of from about 5 nm to about 400 nm, wherein the ratio of intermediate 1: intermediate 2 is in the range of 99:1 to 60:40, preferably 97:3 to 70:30, by mass based on the dry forms of the intermediates; or
the substrate of intermediate 1 is coated with a silica layer having a geometric thickness of about 50 nm to about 70 nm and an iron oxide layer on top of the silica layer having a geometric thickness of about 150 nm to about 350 nm and the substrate of intermediate 2 is coated with a first layer of Fe₂O₃ or TiO₂, wherein the first layer has a geometric thickness of from about 15 nm to about 70 nm and a second layer of silica having a geometric thickness of from about 10 nm to about 110 nm and a third layer of Fe₂O₃ or TiO₂, wherein the third layer has a geometric thickness of from about 15 nm to about 200 nm, wherein the ratio of intermediate 1: intermediate 2 is in the range of 99:1 to 60:40, preferably 97:3 to 70:30, by mass based on the dry forms of the intermediates.

12. The pigment of any one of claims 9-11, wherein the third layer on intermediate 2 is TiO₂.

13. The pigment of any preceding claim, wherein intermediate 1, intermediate 2 or both intermediate 1 and intermediate 2 are surface-treated with: (i) a substance selected from aluminum oxide, cerium oxide and a silane coupling agent, or a combination thereof; (ii) a silane coupling agent; or (iii) aluminum oxide, cerium oxide and at least one silane coupling agent.

14. The pigment of any preceding claim, wherein the d50 median particle size of the metallic flake substrate of intermediate 1 is 9-22 µm and the average thickness of the metallic flake substrate is 10 nm to 1500 nm, preferably 80 to 500 nm, and the aspect ratio of d50 to average thickness is 10-1000, preferably 50-250; and/or wherein the d50 median particle size of the synthetic or natural mica flakes of intermediate 2 is 9-22 µm and the aspect ratio of d50 to average thickness is greater than about 5.

15. The pigment of any one of claims 1-12, wherein intermediate 1 is surface treated with silica and at least one polymer, preferably a polymer formed from a silane and an acrylate monomer, and intermediate 2 is surface treated with aluminum oxide, cerium oxide and at least one silane.

16. A paint, automotive ink, industrial ink, printing ink, coating, varnish, plastic, fiber, film or cosmetic preparation comprising the pigment of any one or more of claims 1-15.

17. A process for making a blue-shade red effect pigment according to any one of claims 1-15 by a wet chemical preparation method, comprising;
a. synthesis of an Intermediate 1 by coating a metallic flake substrate with silica and iron oxide;
b. synthesis of an Intermediate 2 by coating synthetic or natural mica flakes with a first layer of Fe₂O₃ or TiO₂; a second layer of SiO₂; and a third layer of Fe₂O₃ or TiO₂; and
c. blending of Intermediate 1 + Intermediate 2;
wherein the ratio of intermediate 1: intermediate 2 is in the range of 99:1 to 60:40, by mass based on the dry forms of the intermediates.

18. The process of claim 17, wherein intermediate 1 and intermediate 2 undergo individual surface treatment after steps a and b and before being blended together in step c, optionally wherein intermediate 1 and intermediate 2 are surface-treated with a material selected from the group consisting of silica, Al₂O₃, cerium oxide and silane coupling agents, or a combination thereof, optionally wherein prior to step c, intermediate 1 is surface treated with silica and at least one polymer, preferably a polymer formed from a silane and an acrylate monomer, and intermediate 2 is surface treated with aluminum oxide, cerium oxide and at least one silane; or
wherein the red effect pigment is surface treated in an aqueous suspension with aluminum oxides and cerium oxides followed by a silane treatment.

19. The process of claim 18, wherein the geometric thickness of the layer applied in the surface treatment step is 2 to 50 nm, preferably 2 to 30 nm, more preferably 2 to 20 nm.

20. The process of any one of claims 17-19, wherein the ratio of intermediate 1 : intermediate 2 is in the range of 97:3 to 70:30, by mass based on the dry forms of the intermediates, optionally wherein the ratio of intermediate 1 : intermediate 2 is in the range of 80:20 to 70:30, by mass based on the dry forms of the intermediates.

## Patentansprüche

1. Rotes Effektpigment mit Blauton, umfassend ein Gemisch von:
a. einem Zwischenprodukt 1 umfassend ein Metallflockensubstrat, das mit Siliciumdioxid und Eisenoxid beschichtet ist; und
b. einem Zwischenprodukt 2 umfassend synthetische oder natürliche Glimmerflocken, die mit einer ersten Schicht aus Fe₂O₃ oder TiO₂; einer zweiten Schicht aus SiO₂; und einer dritten Schicht aus Fe₂O₃ oder TiO₂ beschichtet sind;
wobei das Verhältnis von Zwischenprodukt 1 : Zwischenprodukt 2 in dem Bereich von 99:1 bis 60:40, bezogen auf die trockenen Formen der Zwischenprodukte, liegt.

2. Pigment nach Anspruch 1, wobei das Metallflockensubstrat in Zwischenprodukt 1 passiviert ist, gegebenenfalls wobei das Metallflockensubstrat mit einer oder mehreren Schichten eines Materials ausgewählt aus der Gruppe bestehend aus Metallphosphat, Aluminiumoxid, hydratisiertem Aluminiumoxid und Kombinationen davon passiviert ist.

3. Pigment nach einem der vorstehenden Ansprüche, wobei Zwischenprodukt 1 und/oder Zwischenprodukt 2 vor dem Mischen mit einem Material ausgewählt aus der Gruppe bestehend aus Siliciumdioxid, Al₂O₃, Ce-Oxid; Silanen oder Gemischen davon oberflächenbehandelt worden sind, um einen Roteffekt mit Blauton zu erhalten, wobei Zwischenprodukt 1 und Zwischenprodukt 2 vorzugsweise beide vor dem Mischen mit einem aus der Gruppe ausgewählten Material oberflächenbehandelt werden.

4. Pigment nach einem der vorstehenden Ansprüche, wobei das Metallflockensubstrat Aluminium umfasst; und/oder wobei die mediane Partikelgröße d50 des Metallflockensubstrats und der synthetischen oder natürlichen Glimmerflocken 9-22 µm beträgt.

5. Pigment nach einem der vorstehenden Ansprüche, wobei Zwischenprodukt 2 eine Siliciumdioxidschicht mit einer geometrischen Dicke von etwa 5 nm bis etwa 300 nm, vorzugsweise etwa 10 nm bis etwa 110 nm, umfasst, wobei die Siliciumdioxidmaterialschicht gegebenenfalls einen Brechungsindex von ≤ 1,8 oder 1,30-1,80 oder 1,30-1,50 oder 1,40-1,50 aufweist.

6. Pigment nach einem der vorstehenden Ansprüche, wobei die dritte Schicht von Zwischenprodukt 2 TiO₂ umfasst, vorzugsweise Rutil und/oder Anatas-Titandioxid mit einer geometrischen Dicke von etwa 5 nm bis etwa 400 nm, vorzugsweise etwa 15 nm bis etwa 200 nm, gegebenenfalls wobei die dritte Schicht von Zwischenprodukt 2 eine geometrische Dicke von etwa 5 nm bis etwa 400 nm und einen Brechungsindex von > 1,80 oder 2,00-4,00 oder 2,00-3,30 oder 2,20-3,00 oder 2,20-2,60 aufweist.

7. Pigment nach einem der vorstehenden Ansprüche, wobei Zwischenprodukt 1 und/oder Zwischenprodukt 2 in einer wässrigen Suspension mit Aluminiumoxiden und Ceroxiden oberflächenbehandelt sind, gefolgt von einer Silanbehandlung.

8. Pigment nach einem der vorstehenden Ansprüche, wobei das Verhältnis von Zwischenprodukt 1 : Zwischenprodukt 2 in dem Bereich von 97:3 bis 70:30, bezogen auf die trockenen Formen der Zwischenprodukte, liegt, gegebenenfalls wobei das Verhältnis von Zwischenprodukt 1 : Zwischenprodukt 2 in dem Bereich von 80:20 bis 70:30, bezogen auf die trockenen Formen der Zwischenprodukte, liegt.

9. Pigment nach einem der vorstehenden Ansprüche, wobei das Substrat von Zwischenprodukt 1 mit einer Siliciumdioxidschicht mit einer geometrischen Dicke von etwa 20 nm bis etwa 100 nm und einer Eisenoxidschicht auf der Siliciumdioxidschicht mit einer geometrischen Dicke von etwa 120 nm bis etwa 500 nm beschichtet ist; oder wobei das Substrat von Zwischenprodukt 1 mit einer Siliciumdioxidschicht mit einer geometrischen Dicke von etwa 50 nm bis etwa 70 nm und einer Eisenoxidschicht auf der Siliciumdioxidschicht mit einer geometrischen Dicke von etwa 150 nm bis etwa 350 nm beschichtet ist.

10. Pigment nach einem der vorstehenden Ansprüche, wobei das Substrat von Zwischenprodukt 2 beschichtet ist mit einer ersten Schicht aus Fe₂O₃ oder TiO₂, wobei die erste Schicht eine geometrische Dicke von etwa 5 nm bis etwa 150 nm aufweist, und einer zweiten Schicht aus Siliciumdioxid mit einer geometrischen Dicke von etwa 5 nm bis etwa 300 nm und einer dritten Schicht aus Fe₂O₃ oder TiO₂, wobei die dritte Schicht eine geometrische Dicke von etwa 5 nm bis etwa 400 nm aufweist, gegebenenfalls wobei das Substrat von Zwischenprodukt 2 beschichtet ist mit einer ersten Schicht aus Fe₂O₃ oder TiO₂, wobei die erste Schicht eine geometrische Dicke von etwa 15 nm bis etwa 70 nm aufweist, und einer zweiten Schicht aus Siliciumdioxid mit einer geometrischen Dicke von etwa 10 nm bis etwa 110 nm und einer dritten Schicht aus Fe₂O₃ oder TiO₂, wobei die dritte Schicht eine geometrische Dicke von etwa 15 nm bis etwa 200 nm aufweist.

11. Pigment nach einem der Ansprüche 1-8, wobei das Substrat von Zwischenprodukt 1 beschichtet ist mit einer Siliciumdioxidschicht mit einer geometrischen Dicke von etwa 20 nm bis etwa 100 nm und einer Eisenoxidschicht auf der Siliciumdioxidschicht mit einer geometrischen Dicke von etwa 120 nm bis etwa 500 nm, und das Substrat von Zwischenprodukt 2 beschichtet ist mit einer ersten Schicht aus Fe₂O₃ oder TiO₂, wobei die erste Schicht eine geometrische Dicke von etwa 5 nm bis etwa 150 nm aufweist, und einer zweiten Schicht aus Siliciumdioxid mit einer geometrischen Dicke von etwa 5 nm bis etwa 300 nm und einer dritten Schicht aus Fe₂O₃ oder TiO₂, wobei die dritte Schicht eine geometrische Dicke von etwa 5 nm bis etwa 400 nm aufweist, wobei das Verhältnis von Zwischenprodukt 1 : Zwischenprodukt 2 in dem Bereich von 99:1 bis 60:40, vorzugsweise 97:3 bis 70:30, bezogen auf die trockenen Formen der Zwischenprodukte, liegt; oder das Substrat von Zwischenprodukt 1 beschichtet ist mit einer Siliciumdioxidschicht mit einer geometrischen Dicke von etwa 50 nm bis etwa 70 nm und einer Eisenoxidschicht auf der Siliciumdioxidschicht mit einer geometrischen Dicke von etwa 150 nm bis etwa 350 nm, und das Substrat von Zwischenprodukt 2 beschichtet ist mit einer ersten Schicht aus Fe₂O₃ oder TiO₂, wobei die erste Schicht eine geometrische Dicke von etwa 15 nm bis etwa 70 nm aufweist, und einer zweiten Schicht aus Siliciumdioxid mit einer geometrischen Dicke von etwa 10 nm bis etwa 110 nm und einer dritten Schicht aus Fe₂O₃ oder TiO₂, wobei die dritte Schicht eine geometrische Dicke von etwa 15 nm bis etwa 200 nm aufweist, wobei das Verhältnis von Zwischenprodukt 1 : Zwischenprodukt 2 in dem Bereich von 99:1 bis 60:40, vorzugsweise 97:3 bis 70:30, bezogen auf die trockenen Formen der Zwischenprodukte, liegt.

12. Pigment nach einem der Ansprüche 9-11, wobei die dritte Schicht auf Zwischenprodukt 2 TiO₂ ist.

13. Pigment nach einem der vorstehenden Ansprüche, wobei Zwischenprodukt 1, Zwischenprodukt 2 oder sowohl Zwischenprodukt 1 als auch Zwischenprodukt 2 oberflächenbehandelt sind mit: (i) einem Stoff ausgewählt aus Aluminiumoxid, Ceroxid und einem Silankupplungsmittel oder einer Kombination davon; (ii) einem Silankupplungsmittel; oder (iii) Aluminiumoxid, Ceroxid und mindestens einem Silankupplungsmittel.

14. Pigment nach einem der vorstehenden Ansprüche, wobei die mediane Partikelgröße d50 des Metallflockensubstrats von Zwischenprodukt 1 9-22 µm beträgt und die mittlere Dicke des Metallflockensubstrats 10 nm bis 1500 nm, vorzugsweise 80 bis 500 nm, beträgt und das Aspektverhältnis von d50 zu der mittleren Dicke 10-1000, vorzugsweise 50-250, beträgt; und/oder
wobei die mediane Partikelgröße d50 der synthetischen oder natürlichen Glimmerflocken von Zwischenprodukt 2 9-22 µm beträgt und das Aspektverhältnis von d50 zu mittlerer Dicke größer als etwa 5 ist.

15. Pigment nach einem der Ansprüche 1-12, wobei Zwischenprodukt 1 mit Siliciumdioxid und mindestens einem Polymer oberflächenbehandelt ist, vorzugsweise einem Polymer, das aus einem Silan und einem Acrylatmonomer gebildet ist, und Zwischenprodukt 2 mit Aluminiumoxid, Ceroxid und mindestens einem Silan oberflächenbehandelt ist.

16. Farbe, Automobilfarbe, Industriefarbe, Druckfarbe, Beschichtung, Lack, Kunststoff, Faser, Folie oder kosmetische Zubereitung umfassend das Pigment nach einem oder mehreren der Ansprüche 1-15.

17. Verfahren zur Herstellung eines roten Effektpigments mit Blauton nach einem der Ansprüche 1-15 durch ein nasschemisches Herstellungsverfahren, umfassend;
a. Synthese eines Zwischenprodukts 1 durch Beschichten eines Metallflockensubstrats mit Siliciumdioxid und Eisenoxid;
b. Synthese eines Zwischenprodukts 2 durch Beschichten von synthetischen oder natürlichen Glimmerflocken mit einer ersten Schicht aus Fe₂O₃ oder TiO₂; einer zweiten Schicht aus SiO₂; und einer dritten Schicht aus Fe₂O₃ oder TiO₂; und
c. Mischen von Zwischenprodukt 1 + Zwischenprodukt 2; wobei das Verhältnis von Zwischenprodukt 1 : Zwischenprodukt 2 in dem Bereich von 99:1 bis 60:40, bezogen auf die trockenen Formen der Zwischenprodukte, liegt.

18. Verfahren nach Anspruch 17, wobei Zwischenprodukt 1 und Zwischenprodukt 2 nach den Schritten a und b und vor Zusammenmischen bei Schritt c einzelner Oberflächenbehandlung unterzogen werden, gegebenenfalls wobei Zwischenprodukt 1 und Zwischenprodukt 2 mit einem Material ausgewählt aus der Gruppe bestehend aus Siliciumdioxid, Al₂O₃, Ceroxid und Silankupplungsmitteln oder einer Kombination davon oberflächenbehandelt werden, gegebenenfalls wobei vor Schritt c Zwischenprodukt 1 mit Siliciumdioxid und mindestens einem Polymer oberflächenbehandelt wird, vorzugsweise einem Polymer, das aus einem Silan und einem Acrylatmonomer gebildet ist, und Zwischenprodukt 2 mit Aluminiumoxid, Ceroxid und mindestens einem Silan oberflächenbehandelt wird; oder
wobei das rote Effektpigment in einer wässrigen Suspension mit Aluminiumoxiden und Ceroxiden oberflächenbehandelt wird, gefolgt von einer Silanbehandlung.

19. Verfahren nach Anspruch 18, wobei die geometrische Dicke der bei dem Oberflächenbehandlungsschritt aufgebrachten Schicht 2 bis 50 nm, vorzugsweise 2 bis 30 nm, bevorzugter 2 bis 20 nm, beträgt.

20. Verfahren nach einem der Ansprüche 17-19, wobei das Verhältnis von Zwischenprodukt 1 : Zwischenprodukt 2 in dem Bereich von 97:3 bis 70:30, bezogen auf die trockenen Formen der Zwischenprodukte, liegt, gegebenenfalls wobei das Verhältnis von Zwischenprodukt 1 : Zwischenprodukt 2 in dem Bereich von 80:20 bis 70:30, bezogen auf die trockenen Formen der Zwischenprodukte, liegt.

## Revendications

1. Pigment à effet rouge à nuance bleue, comprenant un mélange de :
a. un intermédiaire 1 comprenant un substrat de paillettes métalliques revêtu par une silice et de l'oxyde de fer ; et
b. un intermédiaire 2 comprenant des paillettes de mica synthétique ou naturel revêtues par une première couche de Fe₂O₃ ou de TiO₂ ; une deuxième couche de SiO₂ ; et une troisième couche de Fe₂O₃ ou de TiO₂ ;
dans lequel le rapport de l'intermédiaire 1 : intermédiaire 2 est dans la plage de 99:1 à 60:40, en masse sur la base des formes sèches des intermédiaires.

2. Pigment selon la revendication 1, dans lequel le substrat de paillettes métalliques dans l'intermédiaire 1 est passivé, facultativement dans lequel le substrat de paillettes métalliques est passivé avec une ou plusieurs couches d'un matériau choisi dans le groupe constitué par un phosphate métallique, l'oxyde d'aluminium, l'oxyde d'aluminium hydraté et des combinaisons de ceux-ci.

3. Pigment selon l'une quelconque des revendications précédentes, dans lequel l'intermédiaire 1 et/ou l'intermédiaire 2 sont traités en surface avant mélange par un matériau choisi dans le groupe constitué par une silice, Al₂O₃, un oxyde de Ce ; des silanes ou leurs mélanges pour obtenir un effet rouge à nuance bleue, de préférence dans lequel l'intermédiaire 1 et l'intermédiaire 2 sont tous deux traités en surface avant mélange par un matériau choisi dans ledit groupe.

4. Pigment selon l'une quelconque des revendications précédentes, dans lequel le substrat de paillettes métalliques comprend de l'aluminium ; et/ou dans lequel la taille médiane de particule d50 du substrat de paillettes métalliques et des paillettes de mica synthétique ou naturel est de 9-22 µm.

5. Pigment selon l'une quelconque des revendications précédentes, dans lequel l'intermédiaire 2 comprend une couche de silice ayant une épaisseur géométrique d'environ 5 nm à environ 300 nm, de préférence d'environ 10 nm à environ 110 nm, facultativement dans lequel la couche de matériau de silice a un indice de réfraction de ≤ 1,8, ou 1,30-1,80, ou 1,30-1,50, ou 1,40-1,50.

6. Pigment selon l'une quelconque des revendications précédentes, dans lequel la troisième couche d'intermédiaire 2 comprend du TiO₂, de préférence du dioxyde de titane de type rutile et/ou anatase ayant une épaisseur géométrique d'environ 5 nm à environ 400 nm, de préférence d'environ 15 nm à environ 200 nm, éventuellement dans lequel la troisième couche d'intermédiaire 2 a une épaisseur géométrique d'environ 5 nm à environ 400 nm et un indice de réfraction > 1,80 ou 2,00-4,00, ou 2,00-3,30, ou 2,20-3,00, ou 2,20-2,60.

7. Pigment selon l'une quelconque des revendications précédentes, dans lequel l'intermédiaire 1 et/ou l'intermédiaire 2 sont traités en surface dans une suspension aqueuse par des oxydes d'aluminium et des oxydes de cérium, suivi d'un traitement par un silane.

8. Pigment selon l'une quelconque des revendications précédentes, dans lequel le rapport intermédiaire 1:intermédiaire 2 est dans la plage de 97:3 à 70:30, en masse par rapport aux formes sèches des intermédiaires, facultativement dans lequel le rapport intermédiaire 1:intermédiaire 2 est dans la plage de 80:20 à 70:30, en masse par rapport aux formes sèches des intermédiaires.

9. Pigment selon l'une quelconque des revendications précédentes, dans lequel le substrat de l'intermédiaire 1 est revêtu d'une couche de silice ayant une épaisseur géométrique d'environ 20 nm à environ 100 nm et d'une couche d'oxyde de fer au-dessus de la couche de silice ayant une épaisseur géométrique d'environ 120 nm à environ 500 nm ; ou dans lequel le substrat de l'intermédiaire 1 est revêtu d'une couche de silice ayant une épaisseur géométrique d'environ 50 nm à environ 70 nm et d'une couche d'oxyde de fer sur la couche de silice ayant une épaisseur géométrique d'environ 150 nm à environ 350 nm.

10. Pigment selon l'une quelconque des revendications précédentes, dans lequel le substrat de l'intermédiaire 2 est revêtu d'une première couche de Fe₂O₃ ou de TiO₂, dans lequel la première couche a une épaisseur géométrique d'environ 5 nm à environ 150 nm et d'une deuxième couche de silice ayant une épaisseur géométrique d'environ 5 nm à environ 300 nm et d'une troisième couche de Fe₂O₃ ou de TiO₂, dans lequel la troisième couche a une épaisseur géométrique d'environ 5 nm à environ 400 nm, éventuellement dans lequel le substrat de l'intermédiaire 2 est revêtu d'une première couche de Fe₂O₃ ou de TiO₂, la première couche ayant une épaisseur géométrique d'environ 15 nm à environ 70 nm et d'une deuxième couche de silice ayant une épaisseur géométrique d'environ 10 nm à environ 110 nm et d'une troisième couche de Fe₂O₃ ou de TiO₂, dans lequel la troisième couche a une épaisseur géométrique d'environ 15 nm à environ 200 nm.

11. Pigment selon l'une quelconque des revendications 1 à 8, dans lequel le substrat de l'intermédiaire 1 est revêtu d'une couche de silice ayant une épaisseur géométrique d'environ 20 nm à environ 100 nm et d'une couche d'oxyde de fer au-dessus de la couche de silice ayant une épaisseur géométrique d'environ 120 nm à environ 500 nm et le substrat de l'intermédiaire 2 est revêtu d'une première couche de Fe₂O₃ ou TiO₂, dans lequel la première couche a une épaisseur géométrique d'environ 5 nm à environ 150 nm et une deuxième couche de silice ayant une épaisseur géométrique d'environ 5 nm à environ 300 nm, et une troisième couche de Fe₂O₃ ou de TiO₂, la troisième couche ayant une épaisseur géométrique d'environ 5 nm à environ 400 nm, dans lequel le rapport intermédiaire 1:intermédiaire 2 est dans la plage de 99:1 à 60:40, de préférence 97:3 à 70:30, en masse sur la base des formes sèches des intermédiaires ; ou
le substrat de l'intermédiaire 1 est revêtu d'une couche de silice ayant une épaisseur géométrique d'environ 50 nm à environ 70 nm et d'une couche d'oxyde de fer sur la couche de silice ayant une épaisseur géométrique d'environ 150 nm à environ 350 nm et le substrat de l'intermédiaire 2 est revêtu d'une première couche de Fe₂O₃ ou TiO₂ dans lequel la première couche a une épaisseur géométrique d'environ 15 nm à environ 70 nm et une deuxième couche de silice ayant une épaisseur géométrique d'environ 10 nm à environ 110 nm, et une troisième couche de Fe₂O₃ ou de TiO₂, la troisième couche ayant une épaisseur géométrique d'environ 15 nm à environ 200 nm, dans lequel le rapport intermédiaire 1:intermédiaire 2 est dans la plage de 99:1 à 60:40, de préférence 97:3 à 70:30, en masse sur la base des formes sèches des intermédiaires.

12. Pigment selon l'une quelconque des revendications 9 à 11, dans lequel la troisième couche sur l'intermédiaire 2 est TiO₂.

13. Pigment selon l'une quelconque des revendications précédentes, dans lequel l'intermédiaire 1, l'intermédiaire 2 ou l'intermédiaire 1 et l'intermédiaire 2 sont traités en surface par : (i) une substance choisie parmi l'oxyde d'aluminium, l'oxyde de cérium et un agent de couplage de type silane, ou une combinaison de ceux-ci ; (ii) un agent de couplage de type silane ; ou (iii) de l'oxyde d'aluminium, de l'oxyde de cérium et au moins un agent de couplage de type silane.

14. Pigment selon l'une quelconque des revendications précédentes, dans lequel la taille médiane de particule d50 du substrat de paillettes métalliques de l'intermédiaire 1 est de 9-22 µm et l'épaisseur moyenne du substrat de paillettes métalliques est de 10 nm à 1 500 nm, de préférence de 80 à 500 nm, et le rapport d'aspect de d50 sur l'épaisseur moyenne est de 10 à 1 000, de préférence de 50 à 250; et/ou
dans lequel la taille médiane de particule d50 des paillettes de mica synthétique ou naturel de l'intermédiaire 2 est de 9-22 µm et le rapport d'aspect de d50 sur l'épaisseur moyenne est supérieur à environ 5.

15. Pigment selon l'une quelconque des revendications 1 à 12, dans lequel l'intermédiaire 1 est traité en surface par de la silice et au moins un polymère, de préférence un polymère formé à partir d'un silane et d'un monomère d'acrylate, et l'intermédiaire 2 est traité en surface par de l'oxyde d'aluminium, de l'oxyde de cérium et au moins un silane.

16. Peinture, encre automobile, encre industrielle, encre d'impression, revêtement, vernis, plastique, fibre, film ou préparation cosmétique comprenant le pigment selon l'une quelconque ou plusieurs des revendications 1 à 15.

17. Procédé de préparation d'un pigment à effet rouge à nuance bleue selon l'une quelconque des revendications 1-15 par un procédé de préparation chimique par voie humide, comprenant :
a. synthèse d'un intermédiaire 1 en revêtant un substrat de paillettes métalliques par de la silice et de l'oxyde de fer ;
b. synthèse d'un intermédiaire 2 en revêtant des paillettes de mica synthétique ou naturel d'une première couche de Fe₂O₃ ou TiO₂ ; d'une deuxième couche de SiO₂ ; et d'une troisième couche de Fe₂O₃ ou TiO₂ ; et
c. mélange de l'intermédiaire 1 + intermédiaire 2 ;
dans lequel le rapport de l'intermédiaire 1 : intermédiaire 2 est dans la plage de 99:1 à 60:40, en masse sur la base des formes sèches des intermédiaires.

18. Procédé selon la revendication 17, dans lequel l'intermédiaire 1 et l'intermédiaire 2 subissent un traitement de surface individuel après les étapes a et b et avant d'être mélangés ensemble dans l'étape c, éventuellement dans lequel l'intermédiaire 1 et l'intermédiaire 2 sont traités en surface par un matériau choisi dans le groupe constitué par la silice, Al₂O₃, l'oxyde de cérium et les agents de couplage au silane, ou une combinaison de ceux-ci, éventuellement avant l'étape c, l'intermédiaire 1 est traité en surface par de la silice et au moins un polymère, de préférence un polymère formé à partir d'un silane et d'un monomère d'acrylate, et l'intermédiaire 2 est traité en surface par de l'oxyde d'aluminium, de l'oxyde de cérium et au moins un silane ; ou
dans lequel le pigment à effet rouge est traité en surface dans une suspension aqueuse par des oxydes d'aluminium et des oxydes de cérium suivi d'un traitement au silane.

19. Procédé selon la revendication 18, dans lequel l'épaisseur géométrique de la couche appliquée dans l'étape de traitement de surface est de 2 à 50 nm, de préférence de 2 à 30 nm, mieux encore de 2 à 20 nm.

20. Procédé selon l'une quelconque des revendications 17 à 19, dans lequel le rapport intermédiaire 1:intermédiaire 2 est dans la plage de 97:3 à 70:30, en masse par rapport aux formes sèches des intermédiaires, facultativement dans lequel le rapport intermédiaire 1:intermédiaire 2 est dans la plage de 80:20 à 70:30, en masse par rapport aux formes sèches des intermédiaires.
